# EUROPEAN PATENT APPLICATION

(11) **EP 4 354 820 A1**
(43) Date of publication of application: **17.04.2024**
(21) Application number: 22819510.3
(22) Date of filing: 07.06.2022
(51) Int. Cl.: H04L 41/50, H04W 28/24

(54) **INFORMATION TRANSMISSION METHOD AND DEVICE, COMMUNICATION DEVICE AND STORAGE MEDIUM**

(30) Priority: 10.06.2021 CN 202110648662
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Conti, Marco
(86) International application number: PCT/CN2022/097330
(87) International publication number: WO 2022/257912

(57) **Abstract**

The application discloses an information transmission method and apparatus, a communication device, and a storage medium, and pertains to the field of communications technologies. The information transmission method in embodiments of the application includes: receiving, by a first communication device, first information and/or index information for indicating a value of the first information, where the first information includes at least one of the following: data description information of a data packet; data set association information; and first operation indication information; and performing, by the first communication device, a QoS control operation on a data packet based on the first information and/or the index information for indicating the value of the first information.

## Description

### CROSS-REFERENCE TO RELATED APPLICATIONS

This application claims priority to Chinese Patent Application No. 202110648662.X, filed in China on June 10, 2021, which is incorporated herein by reference in its entirety.

### TECHNICAL FIELD

This application relates to the field of communications technologies, and in particular, to an information transmission method and apparatus, a communication device, and a storage medium.

### BACKGROUND

In some communication systems, during scheduling of data packets, a communication device performs quality of service (Quality of Service, QoS) control based on received data packets, and a network-side device cannot obtain information related to the data packets. For example, during QoS control on data packets of an extended reality (Extended Reality, XR) service, the network-side device cannot obtain information related to the data packets. It can be seen that currently there is a problem of relatively poor QoS control performance for data packets.

### SUMMARY

Embodiments of this application provide an information transmission method and apparatus, a communication device, and a storage medium, so as to resolve the problem of relatively poor QoS control performance for data packets.

According to a first aspect, an embodiment of this application provides an information transmission method, including:
receiving, by a first communication device, first information and/or index information for indicating a value of the first information, where the first information includes at least one of the following:
data description information of a data packet;
data set association information; and
first operation indication information; and
performing, by the first communication device, a QoS control operation on a data packet based on the first information and/or the index information for indicating the value of the first information.

According to a second aspect, an embodiment of this application provides an information transmission method, including:
receiving, by a second communication device, a data packet; and
performing, by the second communication device, a second operation on the received data packet, where the second operation includes at least one of the following:
   identifying whether the data packet is data that matches data characteristic information;
   adding target information matching the data characteristic information to a first header of a data packet that matches the data characteristic information;
   adding target information corresponding to a default data set to a first header of a data packet not matching the data characteristic information;
   adding the target information corresponding to the default data set to a first header of a data packet that does not match data characteristic information in any non-default data set mapping rule;
   reordering data packets; and
   performing an operation of mapping the data packet to a data set; where
   the target information includes at least one of the following: first information, and index information for indicating a value of the first information; and
   the first information includes at least one of the following:
      data description information of a data packet;
      data set association information; and
      first operation indication information.

According to a third aspect, an embodiment of this application provides an information transmission method, including:
performing, by a third communication device, a third operation; where
the third operation includes at least one of the following:
   performing a data set mapping operation;
   determining a first operating rule;
   determining a validity time of the first operating rule;
   determining first information and/or index information for indicating a value of the first information;
   sending the first operating rule, or sending the first operating rule and the validity time of the first operating rule; and
   sending the first information and/or the index information for indicating the value of the first information;
   where,
   the first operating rule includes at least one of the following:
      data characteristic information;
      target information corresponding to the data characteristic information;
      operation information for indicating to add target information to data that matches the data characteristic information;
      information for indicating to reorder data packets;
      information for indicating to copy second header information of the data packet to the first header of the data packet; and
      a data set mapping rule; where
      the first information includes at least one of the following: data description information of a data packet;
      data set association information; and
      first operation indication information.

According to a fourth aspect, an embodiment of this application provides an information transmission method, including:
performing, by a fourth communication device, a fourth operation; where
the fourth operation includes at least one of the following:
   performing a data set mapping operation;
   determining first policy information;
   determining validity time information of the first policy information; and
   sending the first policy information, or sending the first policy information and the validity time information of the first policy information; where
   the first policy information includes at least one of the following:
      data characteristic information;
      target information corresponding to the data characteristic information;
      operation information for indicating to add target information to data that matches the data characteristic information;
      information for indicating to reorder data packets;
      information for indicating to copy second header information of the data packet to the first header of the data packet;
      first information corresponding to the data characteristic information; and
      a data set mapping rule;
      where
      the target information includes at least one of the following: first information, and index information for indicating a value of the first information; where
      the first information includes at least one of the following: data description information of a data packet;
      data set association information; and
      first operation indication information.

According to a fifth aspect, an embodiment of this application provides an information transmission method, including:
sending, by a fifth communication device, fifth information, where the fifth information includes at least one of the following:
data characteristic information of first service data;
occurrence time information of a first service; and
first information corresponding to the first service data; where
the first information includes at least one of the following:
   data description information of a data packet;
   data set association information; and
   first operation indication information.

According to a sixth aspect, an embodiment of this application provides an information transmission apparatus, including:
a receiving module, configured to receive first information and/or index information for indicating a value of the first information, where the first information includes at least one of the following:
data description information of a data packet;
data set association information; and
first operation indication information; and
an execution module, configured to perform a QoS control operation on a data packet based on the first information and/or the index information for indicating the value of the first information.

According to a seventh aspect, an embodiment of this application provides an information transmission apparatus, including:
a receiving module, configured to receive a data packet; and
an execution module, configured to perform a second operation on the received data packet, where the second operation includes at least one of the following:
   identifying whether the data packet is data that matches data characteristic information;
   adding target information matching the data characteristic information to a first header of a data packet that matches the data characteristic information;
   adding target information corresponding to a default data set to a first header of a data packet not matching the data characteristic information;
   adding the target information corresponding to the default data set to a first header of a data packet that does not match data characteristic information in any non-default data set mapping rule;
   reordering data packets; and
   performing an operation of mapping the data packet to a data set; where
   the target information includes at least one of the following: first information, and index information for indicating a value of the first information; and
   the first information includes at least one of the following:
      data description information of a data packet;
      data set association information; and
      first operation indication information.

According to an eighth aspect, an embodiment of this application provides an information transmission apparatus, including:
an execution module, configured to perform a third operation; where
the third operation includes at least one of the following:
   performing a data set mapping operation;
   determining a first operating rule;
   determining a validity time of the first operating rule;
   determining first information and/or index information for indicating a value of the first information;
   sending the first operating rule, or sending the first operating rule and the validity time of the first operating rule; and
   sending the first information and/or the index information for indicating the value of the first information;
   where
   the first operating rule includes at least one of the following:
      data characteristic information;
      target information corresponding to the data characteristic information;
      operation information for indicating to add target information to data that matches the data characteristic information;
      information for indicating to reorder data packets;
      information for indicating to copy second header information of the data packet to the first header of the data packet; and
      a data set mapping rule; where
      the first information includes at least one of the following: data description information of a data packet;
      data set association information; and
      first operation indication information.

According to a ninth aspect, an embodiment of this application provides an information transmission apparatus, including:
an execution module, configured to perform a fourth operation; where
the fourth operation includes at least one of the following:
   performing a data set mapping operation;
   determining first policy information;
   determining validity time information of the first policy information; and
   sending the first policy information, or sending the first policy information and the validity time information of the first policy information; where
   the first policy information includes at least one of the following:
      data characteristic information;
      target information corresponding to the data characteristic information;
      operation information for indicating to add target information to data that matches the data characteristic information;
      information for indicating to reorder data packets;
      information for indicating to copy second header information of the data packet to the first header of the data packet;
      first information corresponding to the data characteristic information; and
      a data set mapping rule; where
      the target information includes at least one of the following: first information, and index information for indicating a value of the first information; and
      the first information includes at least one of the following: data description information of a data packet;
      data set association information; and
      first operation indication information.

According to a tenth aspect, an embodiment of this application provides an information transmission apparatus, including:
a sending module, configured to send fifth information, where the fifth information includes at least one of the following:
data characteristic information of first service data;
occurrence time information of a first service; and
first information corresponding to the first service data;
where
the first information includes at least one of the following:
   data description information of a data packet;
   data set association information; and
   first operation indication information.

According to a fifth aspect, an embodiment of this application provides a terminal, including a memory, a processor, and a program or instructions stored in the memory and capable of running on the processor, where when the program or instructions are executed by the processor, the steps of the information transmission method on the first communication device side are implemented; or when the program or instructions are executed by the processor, the steps of the information transmission method on the second communication device side are implemented; or when the program or instructions are executed by the processor, the steps of the information transmission method on the third communication device side are implemented; or when the program or instructions are executed by the processor, the steps of the information transmission method on the fourth communication device side are implemented; or when the program or instructions are executed by the processor, the steps of the information transmission method on the fifth communication device side are implemented.

According to a sixth aspect, a communication device is provided, including a processor and a communication interface, where the processor or the communication interface is configured to perform the steps of the information transmission method on the first communication device side, or the steps of the information transmission method on the second communication device side, the steps of the information transmission method on the third communication device side, the steps of the information transmission method on the fourth communication device side, or the steps of the information transmission method on the fifth communication device side.

According to a ninth aspect, a readable storage medium is provided, where a program or instructions are stored on the readable storage medium, and when the program or instructions are executed by a processor, the steps of the information transmission method on the first communication device side are implemented; or when the program or instructions are executed by the processor, the steps of the information transmission method on the second communication device side are implemented; or when the program or instructions are executed by the processor, the steps of the information transmission method on the third communication device side are implemented; or when the program or instructions are executed by the processor, the steps of the information transmission method on the fourth communication device side are implemented; or when the program or instructions are executed by the processor, the steps of the information transmission method on the fifth communication device side are implemented.

According to a tenth aspect, a computer program/program product is provided, where the computer program/program product is stored in a non-volatile storage medium, and the program/program product is executed by at least one processor to implement the steps of the information transmission method on the first communication device side; or the program/program product is executed by at least one processor to implement the steps of the information transmission method on the second communication device side; or the program/program product is executed by at least one processor to implement the steps of the information transmission method on the third communication device side; or the program/program product is executed by at least one processor to implement the steps of the information transmission method on the fourth communication device side; or the program/program product is executed by at least one processor to implement the steps of the information transmission method on the fifth communication device side.

In the embodiments of this application, the first communication device receives the first information and/or the index information for indicating the value of the first information, where the first information includes at least one of the following: data description information of a data packet; data set association information; and first operation indication information; and the first communication device performs a first operation on a data packet based on the first information and/or the index information for indicating the value of the first information. In this way, the QoS control operation is performed on the data packet based on the first information and/or the index information for indicating the value of the first information. Compared with the prior art that during QoS control, a network-side device cannot obtain information related to data packets, the embodiments of this application can improve QoS control operation performance of data packets.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the purposes of the preferred implementations, and should not be construed as a limitation on this disclosure. Throughout the accompanying drawings, the same reference numerals represent the same parts. In the accompanying drawings:
FIG. 1 is a schematic architectural diagram of a wireless communication system according to an embodiment of this application;
FIG. 2 is a schematic diagram of a data set according to an embodiment of this application;
FIG. 3 is a flowchart of an information transmission method according to an embodiment of this application;
FIG. 4 is a flowchart of another information transmission method according to an embodiment of this application;
FIG. 5 is a flowchart of another information transmission method according to an embodiment of this application;
FIG. 6 is a flowchart of another information transmission method according to an embodiment of this application;
FIG. 7 is a flowchart of another information transmission method according to an embodiment of this application;
FIG. 8 is a schematic diagram of an information transmission method according to an embodiment of this application;
FIG. 9 is a structural diagram of an information transmission apparatus according to an embodiment of this application;
FIG. 10 is a structural diagram of another information transmission apparatus according to an embodiment of this application;
FIG. 11 is a structural diagram of another information transmission apparatus according to an embodiment of this application;
FIG. 12 is a structural diagram of another information transmission apparatus according to an embodiment of this application;
FIG. 13 is a structural diagram of another information transmission apparatus according to an embodiment of this application; and
FIG. 14 is a structural diagram of a communication device according to this application.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application without creative efforts shall fall within the protection scope of this application.

In the specification and claims of this application, the term "include" and any other variants thereof are intended to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device. In addition, in the specification and claims, the use of "and/or" represents presence of at least one of the connected objects, for example, "A and/or B" indicates that the following three cases: only A, only B, or both A and B.

In the embodiments of this application, the word such as "an example" or "for example" is used to represent an example, an instance, or an illustration. Any embodiment or design scheme described as "an example" or "for example" in the embodiments of this application should not be construed as being more preferred or advantageous than other embodiments or design schemes. To be precise, the words such as "an example" or "for example" are intended to present a related concept in a specific manner.

In the specification and claims of this application, the term "include" and any other variants thereof are intended to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device. In addition, in the specification and claims, the use of "and/or" represents presence of at least one of the connected objects, for example, "A and/or B" indicates that the following three cases: only A, only B, or both A and B.

In the embodiments of this application, obtaining may be understood as generating, acquiring from configuration, receiving, obtaining through receiving upon a request, obtaining through self-learning, obtaining through deduction based on non-received information, or obtaining through processing received information, which may be determined according to actual needs. This is not limited in the embodiments of this application.

In the embodiments of this application, transmitting may include broadcasting, broadcasting through a system message, returning a response after receiving the request, sending by using dedicated signaling.

In the embodiments of this application, the network includes a mobile communication network.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or multiple first objects. In addition, in the specification and claims, "and/or" represents presence of at least one of connected objects, and the symbol "/" in this specification usually indicates an "or" relationship between associated objects. Objects indicated by "first" and "second" in some embodiments may be the same or different.

The method and the communication device provided in the embodiments of this application may be applied to a wireless communications system. The wireless communications system may be a fifth-generation (Fifth-generation, 5G) mobile communications system, or an evolved packet system (Evolved Packet System, EPS), or a later evolved communications system. The wireless communications system in the embodiments of this application may be a fifth generation mobile communication network (Fifth-generation system, 5GS) or a long term evolution (Long Term Evolution, LTE) network.

The following describes the embodiments of this application with reference to the accompanying drawings. It should be noted that an information transmission method and apparatus, a communication device, and a storage medium provided in the embodiments of this application are not limited to LTE/LTE-advanced (LTE-Advanced, LTE-A) system, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (Sixth-Generation, 6G) communications system.

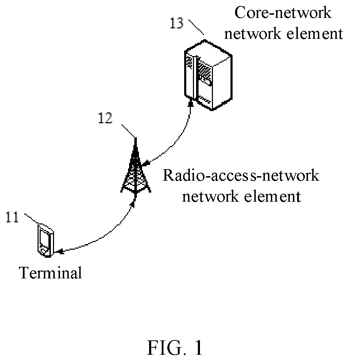

The following describes the embodiments of this application with reference to the accompanying drawings. An information transmission method and apparatus, a communication device, and a storage medium provided in the embodiments of this application can be applied to a network system shown in FIG. 1. The network system shown in FIG. 1 includes: a terminal 11, a radio-access-network network element 12, and a core-network network element 13.

In an optional embodiment of this application, the communication device may include at least one of the following: a communication network element device and a terminal.

In an embodiment of this application, the communication network element may include at least one of the following: a core-network network element and a radio-access-network network element.

In the embodiments of this application, a core-network network element 13 may be referred to as at least one of the following: a core network device, a core network node, a core network function, a core-network network element. A core-network network element may include but is not limited to at least one of the following: a mobility management entity (Mobility Management Entity, MME), an access management function (Access Management Function, AMF), a session management function (Session Management Function, SMF), a user plane function (User Plane Function, UPF), a serving gateway (serving Gate Way, SGW), a packet data network gateway (Packet Data Network Gate Way, PDN-GW), a policy control function (Policy Control Function, PCF), a policy and charging rules function unit (Policy and Charging Rules Function, PCRF), a general packet radio service (General Packet Radio Service, GPRS) serving support node (Serving GPRS Support Node, SGSN), a gateway GPRS support node (Gateway GPRS Support Node, GGSN), a unified data management (Unified Data Management, UDM), a unified data repository (Unified Data Repository, UDR), a home subscriber server (Home Subscriber Server, HSS), an application function (Application Function, AF), and a centralized network configuration (Centralized network configuration, CNC).

In the embodiments of this application, a radio-access-network network element 12 may be referred to as at least one of the following: a radio access network device, a radio access network node, a radio access network function, and a radio-access-network network element. The radio-access-network network element may include but is not limited to at least one of the following: a radio access network device, a radio access network node, a radio access network function, a radio access network unit, a third generation partnership project (Third Generation Partnership Project, 3GPP) radio access network, a non-3GPP radio access network, a centralized unit (Centralized Unit, CU), a distributed unit (Distributed Unit, DU), a base station, an evolved Node B (evolved Node B, eNB), a 5G base station (gNB), a radio network controller (Radio Network Controller, RNC), a base station (NodeB), a non-3GPP interworking function (Non-3GPP Inter Working Function, N3IWF), an access controller (Access Controller, AC) node, an access point (Access Point, AP) device, a wireless local area network (Wireless Local Area Networks, WLAN) node, or an N3IWF.

The base station may be a base transceiver station (BTS, Base Transceiver Station) in a global system for mobile communications (Global System for Mobile Communication, GSM) or code division multiple access (Code Division Multiple Access, CDMA) network, may be a base station (NodeB) in wideband code division multiple access (Wideband Code Division Multiple Access, WCDMA), or may be an evolved NodeB (eNB or eNodeB, evolutional Node B) in LTE, or a 5G NodeB (gNB). This is not limited in the embodiments of this application.

In the embodiments of this application, the UE is a terminal. The terminal 11 may include a relay that supports a terminal function, and/or a terminal that supports a relay function. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), an augmented reality (augmented reality, AR)/virtual reality (virtual reality, VR) device, a robot, a wearable device (Wearable Device), or an in-vehicle device. It should be noted that a specific type of the terminal is not limited in the embodiments of this application.

In addition, the embodiments of this application may be also applied to communication systems such as 4G, 5G, and 6G.

The information transmission method provided in the embodiments of the present invention can resolve the following technical problems:

Scenario 1: Data of video streams in XR can be classified into intra picture (intra picture, I) frame, forward predictive (predictive, P) frame, and bi-directional interpolated prediction (bi-directional interpolated prediction, B) frame. The I frame is also referred to as an independently decoded frame. A frame between I frames is a P frame or B frame. An I frame associated with a P frame or B frame is an I frame closest to the P frame or B frame forward in timeline. Decoding cannot be implemented in absence of I frame; however, decoding can be implemented independently in absence of non-I frame. The I frames have higher importance than non-I frames. QoS requirements for the I frames and non-I frames may be different. For example, the I frames have a higher priority than the non-I frames. A transmit rate for the non-I frames may be higher than the I frames.

Therefore, in a case that one piece of XR service data is mapped to one QoS flow, there are still the following problems to be resolved:
Problem 1: For mapping to one QoS flow, a radio access network (Radio Access Network, RAN) network element cannot distinguish between data of an I frame and data of a non-I frame, and therefore cannot perform scheduling and QoS guarantee separately for the I frame and the non-I frame in the XR service.

Scenario 2: There are data of a left-eye frame and data of a right-eye frame in the XR service, and the data of left-eye frame and data of right-eye frame need to be scheduled together. An importance level is equal for the data of left-eye frame and data of right-eye frame. However, the data of left-eye frame and data of right-eye frame have been time-stamped at present, which may be only quasi-synchronous, that is, there are some differences.

Therefore, in a case that one piece of XR service data is mapped to one QoS flow, there are still the following problems to be resolved:
Problem 2: For mapping to one QoS flow, the RAN network element cannot distinguish between data of a left-eye frame and data of a right-eye frame, and therefore cannot send the data of the left-eye frame and data of the right-eye frame at the same time.

The following describes communications terms involved in the embodiments of this application.

In an embodiment of this application, data and data packet represent a same meaning and can be used interchangeably.

In an embodiment of this application, description information of a data tunnel includes information for identifying the data tunnel. In a case that the data tunnel is a QoS flow, the description information of the data tunnel may be at least one of the following: QoS flow identifier and 5QI.

In an embodiment of this application, a data tunnel may include but is not limited to one of the following: a protocol data unit (Protocol Data Unit, PDU) session, a PDN connection, a QoS flow, a bearer, and an Internet Protocol security (Internet Protocol Security, IPsec) channel, where the bearer may be an evolved radio access bearer (Evolved Radio Access Bearer, E-RAB), a radio access bearer (Evolved Radio Access Bearer, RAB), a data radio bearer (Data Radio Bearer, DRB), a signaling radio bearer (signalling radio bearers, SRB), and the like.

In an embodiment of this application, a first header is a first-protocol header.

In an embodiment of this application, the first protocol is an interface protocol between a first communication device and a second communication device.

In an implementation, when the first communication device is a RAN network element and the second communication device is a gateway, the interface protocol between the first communication device and the second communication device may be an interface protocol between the RAN network element and the gateway, such as an interface protocol of user plane of an NG interface or GPRS tunneling protocol user plane (GPRS Tunneling Protocol user, GTP-U). The first-protocol header may be GTP-U container. The full name of GTP is GPRS tunneling protocol (GPRS Tunneling Protocol, GTP).

In an implementation, when the first communication device is a RAN network element and the second communication device is a terminal, an interface protocol between the first communication device and the second communication device may be an interface protocol between the RAN network element and the terminal, such as radio resource control (Radio Resource Control, RRC) protocol.

In an embodiment of this application, the data set includes data frames. In another embodiment of this application, the data set includes one or more data packets. Data frames are in one-to-one correspondence to data sets or a plurality of data frames are mapped to one data set.

In an implementation, the data frame includes a data frame of a video service. The type of data frame is one of the following: I frame, P frame, B frame, left-eye frame, and right-eye frame.

In an embodiment of this application, type information of a data packet, type information of data, or type information of a data set includes at least one of the following: I frame, non-I frame, left-eye frame, right-eye frame, first type, and other types dependent on the first type. In an implementation, the first type may be referred to as a key type.

In an optional embodiment of this application, the data frame may include one or more data packets with same content or one or more continuous data packets, for example, I frame, non-I frame, P frame, B frame, left-eye frame, and right-eye frame.

In an implementation, the non-I frame includes at least one of the following: P frame and B frame.

In an optional embodiment of this application, description information of a first data set group includes: information for identifying the data set group, and description information of one or more data sets.

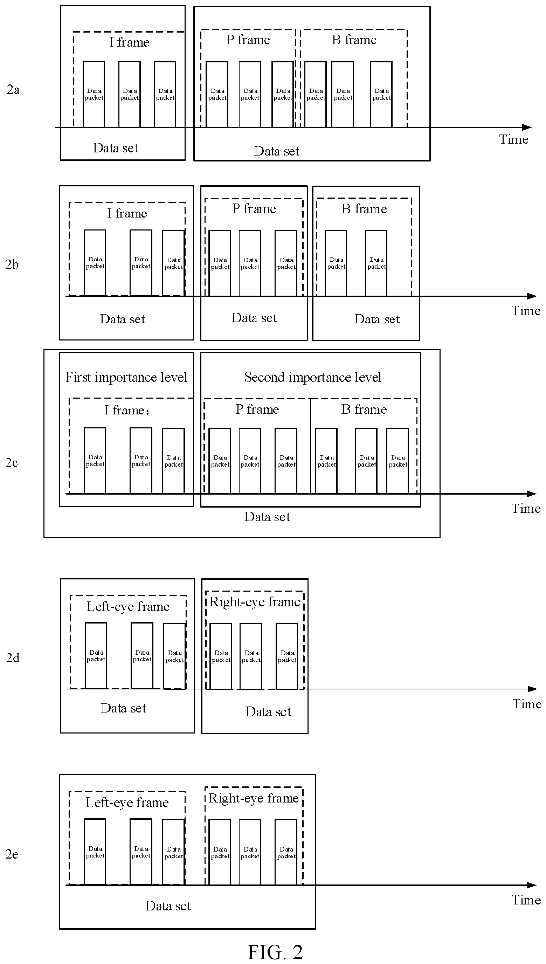

In an optional embodiment of this application, one data set may include multiple data packets of the same type, or data packets of a same frame or multiple frames. For example, as shown in FIG. 2a, one data set includes data packets of an I frame, and another data set includes data packets of a non-I frame, that is, including data packets of a P frame and a B frame. As shown in FIG. 2b, one data set includes data packets of an I frame, another data set includes data packets of a P frame, and still another data set includes data packets of a B frame. As shown in FIG. 2c, one data set includes data packets of an I frame and data packets of a non-I frame, where the data packets of the I frame in the data set is of a first importance level, and the data packet of the non-I frame is of a second importance level. As shown in FIG. 2d, one data set includes data packets of a left-eye frame, and another data set includes data packets of a right-eye frame. As shown in FIG. 2e, one data set includes data packets of both a left-eye frame and a right-eye frame.

In an implementation, different types of data frames may be mapped to different data sets, and numbers of the different data sets are different. For example, numbers of a data set sequence IPBIPPI are 1-1, P-1, B-1, 1-2, P-2, P-3, and 1-3.

In another implementation, different types of data frames may be mapped to data sets of a same type, for example, the P frame and B frame may be mapped to a data set of a non-I frame. For example, numbers of a data set sequence IPBIPPI are 1-1, non-I-1, non-I-1, 1-2, non-I-2, non-I-2, and 1-3.

Further, in an implementation, different types of data frames mapped to the same type of data set correspond to different data set numbers, for example, numbers of a data set sequence IPBIPPI are I-1, non-I-1, non-I-2, I-2, non-I-3, non-I-4, and I-3.

Further, in another implementation, different types of data frames mapped to a same type of data set correspond to a same data set number, for example, numbers of a data set sequence IPBIPPI are 1,2,2,2,1,2,2,1.

In another implementation, different types of data frames that have an association relationship (such as a dependency relationship) are mapped to one data set, for example, numbers of a data set sequence IPBIPPI are 1112223.

In an embodiment of this application, the importance level may include one or more importance levels. The importance level information includes at least one of the following: equality, and information for identifying the importance level.

In an implementation, the information for identifying the importance level includes: an importance level number (for example, the N-th importance level). In an implementation, a larger importance level number indicates a higher importance level. In another implementation, a smaller importance level number indicates a lower importance level.

In an implementation, the importance level is referred to as priority.

In an optional implementation of this application, a data set having an association relationship with a first data set includes at least one of the following: a data set dependent on the first data set.

In an optional implementation of this application, a data set having an association relationship with a second data set includes at least one of the following: a data set on which the second data set depends.

In an optional implementation of this application, a data packet having an association relationship with first data includes at least one of the following: belonging to a data set same as that of the first data, and data dependent on the first data.

In an optional implementation of this application, a data packet having an association relationship with second data includes at least one of the following: belonging to a data set same as that of the second data, and data dependent on the second data.

In an optional implementation of this application, a data set to which data packets belong is a data set mapped to data characteristic information of the data packets.

In an optional implementation of this application, target information of the data characteristic information includes first information corresponding to the data set mapped to the data characteristic information. After the target information matching the data characteristic information is added to a first header of the data packet matching the data characteristic information, a data set to which the data packet belongs is a data set mapped to the data characteristic information.

In an optional implementation of this application, after target information corresponding to a default data set is added to a first header of a data packet not matching the data characteristic information, a data set to which the data packet not matching the data characteristic information belongs is the default data set. When a plurality of data sets are present in one data tunnel, the default data set has the lowest importance level.

In an optional implementation of this application, after target information corresponding to a default data set is added to a first header of a data packet not matching data characteristic information in any non-default data set mapping rule, a data set to which the data packet belongs is the default data set.

In an optional embodiment of this application, the time stamp includes at least one of the following: decoding timestamp, display timestamp, and transmit timestamp.

In an optional embodiment of this application, the timestamp difference range includes one time value, representing a positive or negative time difference. For example, the timestamp difference range is 5ms. Timestamp differences less than and/or equal to plus or minus 5ms fall within the timestamp difference range.

In an optional embodiment of this application, the data characteristic information includes at least one of the following: service description information, data characteristic description, data association relationship, second header information corresponding to the data characteristic information, and information about a protocol to which the data characteristic information belongs, and layer information of a protocol to which the data characteristic information belongs.
(1) In an optional embodiment of this application, the service is a service flow to which data belongs. In an implementation, the service description information includes at least one of the following: service type information, fully qualified domain name (Fully Qualified Domain Name, FQDN), source Internet Protocol (Internet Protocol, IP) address, target IP address, source port, target end, protocol number, source media access control (Media Access Control, MAC) address, target MAC address, service application (Application) identifier, operating system (operating system, OS) identifier, packet detection rule (packet detection rule, PDR), and data network name (Data Network Name, DNN).
(2) In an optional embodiment of this application, the data characteristic description includes at least one of the following: data type information and timestamp information. The data type information is, for example, type information of a data frame. The type information of the data frame includes at least one of the following: I frame, P frame, B frame, left-eye frame, and right-eye frame.
(3) In an implementation, second header information is a second-protocol header of a data packet. When the second protocol is a moving picture experts group (Moving Picture Experts Group, MPEG) protocol, the second header information may be a network abstract layer (Network Abstract Layer, NAL) of the MPEG protocol.
   In an implementation, whether data is first data can be determined based on data characteristic information in the second header information of the data packet.
   In an implementation, the data characteristic information may be obtained from the second header information. For example, an I frame may be obtained by reading a NAL header of the MPEG protocol.
(4) In an optional embodiment of this application, the protocol information includes at least one of the following: a name of the protocol, a version number of the protocol, and information for identifying the protocol. In an implementation, the protocol includes: an MPEG protocol (such as one of the following: H.264, H.265, or the like).
(5) In an optional embodiment of this application, the layer information of the protocol to which the data characteristic information belongs may be the number of layers from an outermost protocol of the data to a protocol to which the data characteristic information belongs. For example, if a data packet structure corresponding to the I frame is IP (TCP (MPEG)), the layer information of the protocol to which the data characteristic information belongs is the third layer, the information of the protocol to which the data characteristic information belongs is the MPEG protocol, and header information corresponding to the data characteristic information is an I frame. Based on the layer information of the protocol to which the data characteristic information belongs, the data packet can be identified as an I frame.
(6) In an optional embodiment of this application, association relationship information of data includes data description information of data B. The data B is data associated with data A indicated by the data characteristic description.

In a case that the data A is a data frame, the association relationship information of the data includes: reference frame information of the data A. For example, a reference frame of the P frame is an I frame.

In an optional embodiment of this application, the association relationship includes at least one of the following: a dependency relationship and a dependent relationship. For example, the left-eye frame and the right-eye frame have an association relationship. The I frame and the P frame have a dependency relationship. In other words, the I frame is depended on by the P frame, and the P frame depends on the I frame.

When data A depends on data B, it may mean that data A cannot be decoded independently and needs to be decoded only on the basis of data B.

In an optional implementation of this application, the coordinative scheduling includes: performing coordinative scheduling and/or QoS guarantee on data sets and/or data packets having an association relationship, which is, for example, at least one of the following: being sent continuously, being sent at the same time, being sent together, and being sent in a same time range.

In an optional implementation of this application, index information for indicating description information of the data set means that there is a mapping relationship between the index information and a value of the description information of the data set. The value of the description information of the data set can be then learned based on the index information.

In an optional implementation of this application, the validity time information includes validity time period information.

In an optional implementation of this application, the data set may also be referred to as one of the following: data segment, data frame, and application data.

In an optional implementation of this application, the data set mapping rule includes at least one of the following: data characteristic information, description information of the data set, information for identifying the data set mapping rule, and priority of the data set mapping rule.

In an implementation, when the value of the data characteristic information is any data or undefined, the data set is a default data set, and the data set mapping rule is a default data set mapping rule.

In an implementation, the data characteristic information indicates that a data packet matching the data characteristic information is mapped to a data set indicated by the description information of the data set.

In an implementation, the data set is a default data set, which is used to map data that does not match the data characteristic information. When a plurality of data sets are present in one data tunnel, the default data set has the lowest importance level.

The data set mapping operation includes at least one of the following:
mapping data satisfying at least one of the following to different data sets: data of different data frames, data of different types of data frames, data of data frames of different importance levels, data of different types, data of different importance levels, data of different types in a same data frame, and data of different importance levels in the same data frame;
mapping data satisfying at least one of the following to a same data set: data of a same data frame, data of data frames of a same type, data of data frames of a same importance level, data of a same type, and data of a same importance level;
mapping an importance level of a data frame or an importance level of data to an importance level of a data frame;
in a case that a data frame A depends on a data frame B, and the data frame A and the data frame B are mapped to different data sets, setting a priority of the data set of the data frame A to be higher than a priority of the data set of the data frame B; and
in a case that data A depends on data B, and the data A and the data B are mapped to different data sets, setting a priority of the data set of the data A to be higher than a priority of the data set of the data B, where the data A and the data B have a same data frame.

In an optional embodiment of this application, the information obtained by the terminal from the control plane signaling of the communication network includes: information obtained by a communications module of the terminal from the control plane signaling of the communication network. In an optional embodiment of this application, the communication module may include a chip used for communicating with a network. The control plane signaling includes at least one of the following: non-access stratum (Non-Access Stratum, NAS) signaling and access stratum (Access Stratum, AS) signaling (also referred to as RRC signaling).

In another implementation, the information obtained by the terminal from the control plane signaling of the communication network may be information generated by the communication network. The information needs to be sent by an application client to a application server through an application layer. It is easy to understand that the information sent through the application layer may be packaged into user plane data in the communication network, thereby reducing impact on a control plane interface.

The following clearly and completely describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application without creative efforts shall fall within the protection scope of this application.

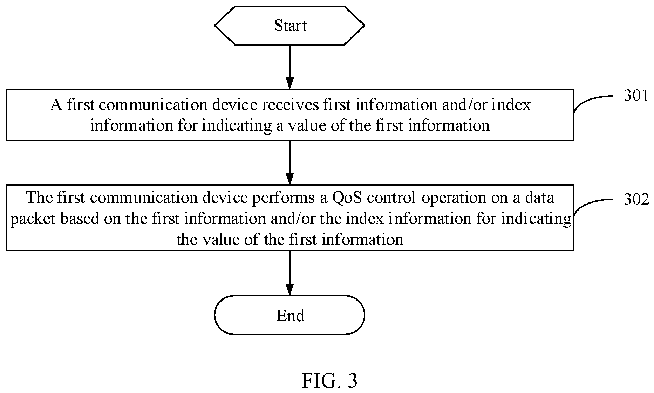

Referring to FIG. 3, an embodiment of this application provides an information transmission method. The method is applied to a first communication device. The first communication device includes but is not limited to: a RAN network element. The method includes the following steps.

Step 301: The first communication device receives first information and/or index information for indicating a value of the first information, where the first information includes at least one of the following:
data description information of a data packet;
data set association information; and
first operation indication information.

Step 302: The first communication device performs a QoS control operation on a data packet based on the first information and/or the index information for indicating the value of the first information.

In an implementation, the first communication device includes: a radio-access-network network element.

In an implementation, the first communication device includes: a terminal.

In an implementation, the first communication device may receive the first information and/or index information for indicating the value of the first information from the second communication device, and the second communication device may include a core-network network element, such as a UPF, or the second communication device may include a terminal.

In an implementation, the index information for indicating the value of the first information may be index information of the value of the first information, and the first information may be determined based on the index information.

In an implementation, the first information may be determined based on the index information for indicating the value of the first information.

Through the above steps, the QoS control operation can be performed on the data packet based on the first information and/or the index information for indicating the value of the first information, so that performance of the QoS control operation on the data packet can be improved.

Optionally, the data description information of the data packet includes at least one of the following:
description information of a data set to which the data packet belongs and/or index information for indicating the description information of the data set to which the data packet belongs;
information for identifying the data packet;
type information of the data packet;
importance level of the data packet; and
timestamp information of the data packet.

In an implementation, based on the description information of the data set to which the data packet belongs, related information of the data set to which the data packet belongs can be determined, for example, importance level information, type information, label information, and sequence number, thereby improving QoS control effects. For example, a data packet of a non-I frame carries a sequence number of an associated I frame, so as to implement coordinate scheduling and QoS guarantee for the I frame and non-I frame in the XR service. For another example, for mapping to one QoS flow, synchronous scheduling may be performed based on timestamps of the data packets, that is, data packets with a same timestamp or within a timestamp difference range need to be scheduled synchronously. Alternatively, synchronous scheduling may be performed based on timestamps, that is, data packets with a same timestamp or data packets within a timestamp difference range and with equal importance level labels need to be scheduled synchronously.

In an implementation, a data packet can be identified based on the information for identifying the data packet, thereby improving QoS control effects.

In an implementation, a type of the data packet can be identified based on the type information of the data packet, thereby improving QoS control effects.

In an implementation, an importance level of the data packet can be identified based on the importance level of the data packet, thereby improving QoS control effects.

In an implementation, timestamp information of the data packet can be identified based on the timestamp information of the data packet, thereby improving QoS control effects.

Optionally, the description information of the data set includes at least one of the following:
information for identifying the data set;
importance level information of the data set;
type information of the data set;
label information of the data set; and
a sequence number of the data set.

In an implementation, the data set includes one or more data packets. When data set sequence numbers of two data packets are the same, importance levels of the two data packets may be different or the same.

In an implementation, the data sets of the two data packets are of the same type; however, sequence numbers of the data sets to which the two data packets belong may be different. For example, for a frame sequence of IPBIPPI, the 1st frame, the 4th frame and the 7th frame correspond to data sets of the I frame type; however, sequence numbers of the data sets corresponding to these frames may be different, such as 1, 2, and 3.

In an implementation, one data set can be used to map data from one or more data frames.

In an implementation, the importance level information, type information, label information, and sequence number of the data set can be identified based on the foregoing importance level information, type information, label information, and sequence number of the data set, so as to perform a QoS control operation based on the content, thereby improving QoS control effects.

Optionally, the information for identifying the data set includes at least one of the following:
index information for indicating the description information of the data set;
importance level information of the data set;
type information of the data set;
label information of the data set; and
a sequence number of the data set.

In an implementation, the index information for indicating the description information of the data set may be index information for the value of the description information of the data set, and the description information of the above data set can be determined based on the index information.

In an implementation, different data sets have different importance levels, and the data sets may be identified based on the importance level information of the data sets. It is easy to understand that importance levels of data sets to which data in one data tunnel belongs may be different and therefore the data can be identified based on the importance level information of the data sets.

In another implementation, different data sets have a same importance level, and in this case, the data sets cannot be identified based on the importance level information of the data sets.

In an implementation, the importance level information is distinguished by different importance level numbers.

In an implementation, the data tunnel includes a QoS flow.

In an implementation, the label information of the data set may include label information for identifying information such as the type and importance level of the data set.

In an implementation, different types of data frames may be mapped to different data sets, and numbers of the different data sets are different. For example, numbers of a data set sequence IPBIPPI are I-1, P-1, B-1, I-2, P-2, P-3, and I-3.

In another implementation, different types of data frames may be mapped to data sets of a same type, for example, the P frame and B frame may be mapped to a data set of a non-I frame.

Further, in an implementation, different types of data frames mapped to the same type of data set correspond to different data set numbers, for example, numbers of a data set sequence IPBIPPI are I-1, non-I-1, non-I-2, I-2, non-I-3, non-I-4, and I-3.

Further, in another implementation, different types of data frames mapped to a same type of data set correspond to a same data set number, for example, numbers of a data set sequence IPBIPPI are 1,2,2,2,1,2,2,1.

In another implementation, different types of data frames that have an association relationship (such as a dependency relationship) are mapped to one data set, for example, numbers of a data set sequence IPBIPPI are 1112223.

In an implementation, the importance level information, type information, label information, and sequence number of the data set can be identified based on the foregoing importance level information, type information, label information, and sequence number of the data set, so as to perform a QoS control operation based on the content, thereby improving QoS control effects.

Optionally, the data set association information includes at least one of the following:
description information of a data set that data set A depends on;
description information of a data set dependent on data set A;
description information of a data set associated with a data set to which the data packet belongs;
description information of data sets having an association relationship; and
description information of a data set group;
where
the data set group includes two or more data sets having an association relationship.

In an implementation, the data set A may be a data set to which the data packet belongs.

In an implementation, the data set associated with the data set A includes at least one of the following: a data set on which the data set A depends, and a data set that depends on the data set A.

For example, when the data set A is used for data of a non-I frame, the data set B may be used for a data set of an I frame. In this case, the data set B is a data set that depends on the data set A.

For example, when the data set A is used for data of an I frame, the data set B may be used for a data set of a non-I frame. In this case, the data set B is a data set on which a first data set depends.

For example, the data set A is data of a left-eye frame, the data set B is data of a right-eye frame, and there is an association relationship between the data set A and the data set B. That is, a data set associated with the data set A may be the data set B; and vice versa.

In an implementation, associated data sets can be identified based on the description information of the data set or the description information of the data set group, so as to perform corresponding QoS control operation on the associated data sets, thereby improving QoS control effects.

Optionally, the first operation indication information includes: operation information; or
the first operation indication information includes: operation information and at least one of the following:
description information of third data and/or description information of fourth data;
description information of a third data set and/or description information of a fourth data set;
description information of a fifth data set;
description information of a first data set group;
first time period; and
information about a timestamp difference range; where
the first time period is used to indicate one of the following: the operation information being executed within the first time period, and a validity time period of the operation information.

In an implementation, the third data and the fourth data may include at least one of the following characteristics:
a data set to which the fourth data belongs is the same as a data set to which the third data belongs;
a type of the fourth data is different from a type of the third data;
an importance level of the fourth data is different from an importance level of the third data;
the fourth data depends on the third data or the third data is depended by the fourth data;
the fourth data has an association relationship with the third data; and
an importance level of the fourth data is lower than an importance level of the third data.

For example, the third data and the fourth data may be data of different types or different importance levels in the same data set.

In an implementation, the fourth data set includes at least one of the following:
a data set dependent on the third data set;
a data set having an association relationship with the third data set; and
a data set having an importance level lower than an importance level of the third data set.

In an implementation, the data set group includes multiple data sets, and may include multiple data sets of the same type that are associated with each other.

Optionally, the description information of the third data and the description information of the fourth data are used to indicate: dropping or skipping sending the fourth data in a case that the third data is lost or fails to be sent;
and/or
the description information of the third data is used to indicate: in a case that the third data is lost or fails to be sent, dropping or skipping sending data that satisfies at least one of the following: other data dependent on the third data in a same data set; other data associated with the third data in the same data set; other data in the same data set; and other data whose importance level is lower than that of the third data in the same data set; where the same data set is a data set to which the third data belongs;
   and/or
the description information of the fourth data is used to indicate: in a case that data satisfying a first condition is lost or fails to be sent, dropping or skipping sending the fourth data; where the first condition includes at least one of the following: other data dependent on the fourth data in a same data set; other data associated with the fourth data in the same data set; other data in the same data set; and other data whose importance level is higher than that of the fourth data in the same data set; where the same data set is a data set to which the fourth data belongs;
   and/or
the description information of the third data set and the description information of the fourth data set are used to indicate: dropping or skipping sending data of the fourth data set in a case that the third data set is lost or fails to be sent;
   and/or
the description information of the third data set is used to indicate: in a case that the third data set is lost or fails to be sent, dropping or skipping sending data that satisfies at least one of the following: data of a data set dependent on the third data set; data of a data set that has an association relationship with a first data set; and data of a data set whose importance level is lower than that of the third data set;
   and/or
the description information of the fourth data set is used to indicate: in a case that a data set satisfying a second condition is lost or fails to be sent, dropping or skipping sending data of the fourth data set; where the second condition includes at least one of the following: a data set on which the fourth data set depends; a data set associated with the fourth data set; and a data set whose importance level is higher than that of the fourth data set;
   and/or
the description information of the fifth data set is used to indicate: a data set to which the operation information is applied;
   and/or
the description information of the first data set group is used to indicate: data sets to which the operation information is applied.

Optionally, the operation information is used to indicate at least one of the following:
performing an operation of dropping or not sending a data packet;
performing a collaborative scheduling operation on data packets;
performing a reordering operation on data packets;
sending data packets based on importance levels;
performing QoS guarantee based on a granularity of data set; and
prioritizing data with a higher importance level in a same data tunnel.

Optionally, the QoS control operation includes at least one of the following:
performing an operation of dropping or not sending a data packet;
performing a collaborative scheduling operation on data packets;
performing a reordering operation on data packets;
sending data packets based on importance levels;
performing QoS guarantee based on a granularity of data set; and
prioritizing data with a higher importance level in a same data tunnel.

In an implementation, the performing an operation of dropping or not sending a data packet, performing a collaborative scheduling operation on data packets, performing a reordering operation on data packets sending data packets based on importance levels, performing QoS guarantee based on a granularity of data set, and prioritizing data with a higher importance level in a same data tunnel an improve the QoS guarantee for data packets.

Optionally, the performing an operation of dropping or not sending a data packet includes at least one of the following:
in a case that first data is lost or fails to be sent, dropping or skipping sending data that satisfies at least one of the following: other data dependent on the first data in a same data set; other data associated with the first data in the same data set; other data in the same data set; and other data whose importance level is lower than that of the first data in the same data set; where the same data set is a data set to which the first data belongs;
in a case that data satisfying a fourth condition is lost or fails to be sent, dropping or skipping sending the second data; where the fourth condition includes at least one of the following: other data dependent on the second data in a same data set; other data associated with the second data in the same data set; other data in the same data set; and other data whose importance level is higher than that of the second data in the same data set; where the same data set is a data set to which the second data belongs;
in a case that the first data set is lost or fails to be sent, dropping or skipping sending data that satisfies at least one of the following: data of a data set dependent on the first data set; data of a data set that has an association relationship with the first data set; and data of a data set whose importance level is lower than that of the third data set;
in a case that a data set satisfying a fifth condition is lost or fails to be sent, dropping or skipping sending data of the second data set; where the fifth condition includes at least one of the following: a data set on which the second data set depends; a data set associated with the second data set; and a data set whose importance level is higher than that of the second data set;
in a case that the third data is lost or fails to be sent, dropping or skipping sending the fourth data;
in a case that third data is lost or fails to be sent, dropping or skipping sending data that satisfies at least one of the following: other data dependent on the third data in a same data set; other data associated with the third data in the same data set; other data in the same data set; and other data whose importance level is lower than that of the third data in the same data set; where the same data set is a data set to which the third data belongs;
in a case that data satisfying a sixth condition is lost or fails to be sent, dropping or skipping sending the fourth data; where the sixth condition includes at least one of the following: other data dependent on the fourth data in a same data set; other data associated with the fourth data in the same data set; other data in the same data set; and other data whose importance level is higher than that of the fourth data in the same data set; where the same data set is a data set to which the fourth data belongs;
in a case that the third data set is lost or fails to be sent, dropping or skipping sending the fourth data set;
in a case that the third data set is lost or fails to be sent, dropping or skipping sending data that satisfies at least one of the following: data of another data set dependent on the third data set; data of another data set that has an association relationship with the first data set; and data of a data set whose importance level is lower than that of the third data set; and
in a case that a data set satisfying a seventh condition is lost or fails to be sent, dropping or skipping sending data of the fourth data set; where the seventh condition includes at least one of the following: a data set on which the fourth data set depends; a data set associated with the fourth data set; and a data set whose importance level is higher than that of the fourth data set; where
the performing a reordering operation on data packets includes: reordering data packets of data sets and/or timestamps of data packets based on importance level of data set and/or data set association information.

In an implementation, the first data may be data of a first importance level or a first type, such as data of an I frame.

In an implementation, the first data may be any data in the data tunnel, or the first data may be any data in the data set.

In an implementation, the left-eye frame and the right-eye frame are mapped to a same data set, the first data may be first-type data, such as data of the left-eye frame, and other data associated with the first data may be second-type data, such as data of the right-eye frame. In this case, importance levels of the data of the left-eye frame and the data of the right-eye frame may be the same.

Optionally, the first data is one of the following: any data in a data set, and data having an association relationship with the second data;
and/or
the second data is one of the following: any data in a data set, data having an association relationship with the first data;
   and/or
the data set is one of the following: any data set in a data tunnel, the third data set included in the first operation indication information, the fourth data set included in the first operation indication information, the fifth data set included in the first operation indication information, or any data set in the first data set group included in the first operation indication information;
   and/or
the first data set is one of the following: any data set in a data tunnel, the fifth data set included in the first operation indication information, or any data set in the first data set group included in the first operation indication information, and a data set having an association relationship with the second data set;
   and/or
the second data set is one of the following: any data set in a data tunnel, the fifth data set included in the first operation indication information, or any data set in the first data set group included in the first operation indication information, and a data set having an association relationship with the first data set.

Optionally, the performing a collaborative scheduling operation on data packets includes: performing the collaborative scheduling operation on data packets satisfying a third condition; where
the third condition includes at least one of the following:
data sets to which the data packets belong are the same;
data sets to which the data packets belong have an association relationship or data sets to which the data packets belong have a dependency relationship;
timestamps of the data packets are the same or difference times of timestamps are within a timestamp difference range;
data sets to which the data packets belong match a data set indicated by the description information of the fifth data set in the first operation indication information; and
data sets to which the data packets belong match a data set indicated by the description information of the first data set group in the first operation indication information.

In an implementation, data packets in the coordinative scheduling of the data packets are two or more data packets.

In an implementation, data sets to which the data packets belong being the same includes that sequence numbers of the data sets to which the data packets belong are the same.

Optionally, the performing a reordering operation on data packets includes: reordering the data packets based on at least one of the following: importance level of data set, data set association information, and timestamp of data packet;
and/or
the importance level in the sending data packets based on importance level is at least one of the following: importance level of data packet, and importance level of data set.

Optionally, the obtaining, by a first communication device, first information and/or index information for indicating a value of the first information includes one of the following:
receiving, from control plane signaling and/or a first header of a data packet, the first information and/or the index information for indicating the value of the first information; or
obtaining the first information based on a local configuration; where
the first header of the data packet is a header of a first protocol.

In an implementation, the receiving the first information from the control plane signaling includes: receiving data description information of the data packet from the control plane signaling.

In an implementation, the receiving the first information from the first header of the first data includes: receiving data description information of the data packet from the first header of the data packet.

In an implementation, the first protocol is the GTP protocol.

In an implementation, the first header is a GTP-U protocol.

Optionally, the receiving, from control plane signaling and/or a first header of a data packet, the first information and/or the index information for indicating the value of the first information includes at least one of the following:
receiving data description information of the data packet from the first header of the data packet, and/or receiving, from the control plane signaling, other content than the data description information of the data packet in the first information; and
receiving, from the control plane signaling, the index information for indicating the value of the first information; and receiving, from the first header of the data packet, the index information for indicating the value of the first information.

In an implementation, the data description information of the data packet is received from the first header of the data packet, and the data set association information and/or the first operation indication information is received from the control plane signaling.

In this embodiment of this application, the first communication device receives the first information and/or the index information for indicating the value of the first information, where the first information includes at least one of the following: data description information of a data packet; data set association information; and first operation indication information; and the first communication device performs a QoS control operation on a data packet based on the first information and/or the index information for indicating the value of the first information. In this way, the QoS control operation is performed on the data packet based on the first information and/or the index information for indicating the value of the first information. Compared with the prior art that during QoS control, a network-side device cannot obtain information related to data packets, the embodiments of this application can improve QoS control operation performance of data packets.

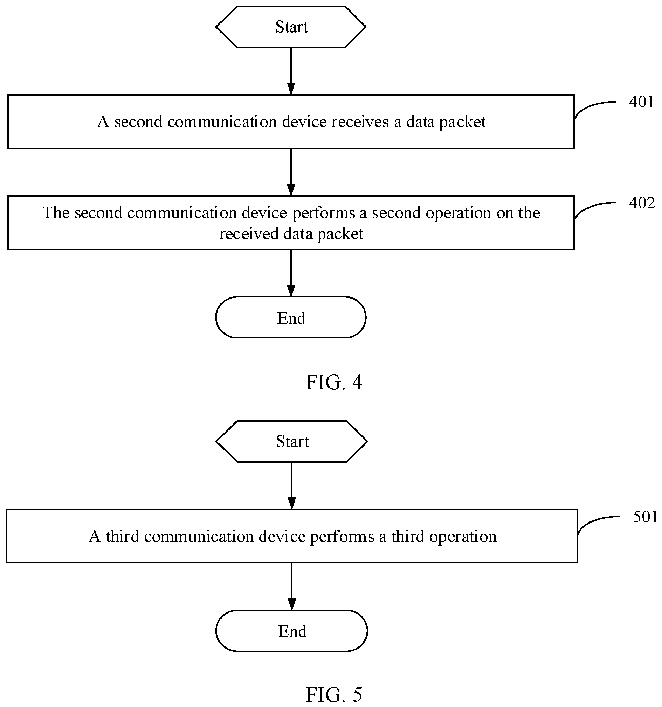

Referring to FIG. 4, an embodiment of this application provides an information transmission method. A second communication device includes but is not limited to at least one of the following: a core network (Core Network, CN) network element (such as a gateway, where the gateway includes a UPF), and a terminal. The method includes the following steps.

Step 401: The second communication device receives a data packet.

Step 402: The second communication device performs a second operation on the received data packet, where the second operation includes at least one of the following:
identifying whether the data packet is data that matches data characteristic information;
adding target information matching the data characteristic information to a first header of a data packet that matches the data characteristic information;
adding target information corresponding to a default data set to a first header of a data packet not matching the data characteristic information;
adding the target information corresponding to the default data set to a first header of a data packet that does not match data characteristic information in any non-default data set mapping rule;
reordering data packets; and
performing an operation of mapping the data packet to a data set; where
the target information includes at least one of the following: first information, and index information for indicating a value of the first information; and
the first information includes at least one of the following:
   data description information of a data packet;
   data set association information; and
   first operation indication information.

In an implementation, the second communication device may include UE, and the UE receives a data packet from an application layer of the UE.

In an implementation, the second communication device may include a gateway, and the gateway receives a data packet from a third communication device, for example, a UPF receives a data packet from an SMF.

In an implementation, the first service data may be a data packet of an I frame, a data packet of a left-eye frame, a data packet of a right-eye frame, or the like.

In an implementation, the reordering data packets includes: performing reordering based on timestamps of the data packets.

In an implementation, the default data set is used to map data that does not match the data characteristic information. When a plurality of data sets are present in one data tunnel, the default data set has the lowest importance level.

In an implementation, for the first information, reference may be made to the related description in the embodiment shown in FIG. 2; and details are not repeated herein.

In this embodiment of this application, identifying a data packet as the first service data or not as the first service data helps improve QoS control effects for the data packet. In addition, adding the target information matching the first service data to the first header of the first service data also helps improve QoS control effects for the data packet.

Optionally, the operation of identifying whether the data packet is the first service data or not includes at least one of the following:
based on data characteristic information in second header information (such as information in second-protocol header) of the data packet, identifying whether the data packet is the first service data or not.

In an implementation, the second header information includes at least one of the following:
real-time transport protocol (Real-time Transport Protocol, RTP) header information; and
MPEG protocol packet information.

In an implementation, data types for identification based on the data characteristic information may be, for example, I frame, P frame, B frame, left-eye frame, and right-eye frame.

Optionally, the first header is a first-protocol header, and the first protocol includes at least one of the following: an interface protocol (such as GTP-U) between a first communication device and the second communication device.

Optionally, the performing, by the second communication device, the second operation on the received data includes:
obtaining, by the second communication device, a first operating rule and/or validity time information of the first operating rule; and
performing, by the second communication device, a second operation on the received data according to the first operating rule and/or the validity time information of the first operating rule;
where
the first operating rule includes at least one of the following:
   data characteristic information;
   target information corresponding to the data characteristic information;
   operation information for indicating to add target information to data that matches the data characteristic information;
   information for indicating to reorder data packets;
   information for indicating to copy second header information of the data packet to the first header of the data packet; and
   a data set mapping rule.

In an implementation, the data set mapping operation is specifically as described in the embodiment of a fourth communication device (for example, a PCF), and details are not repeated herein.

In an implementation, the first information in the target information corresponding to the data characteristic information is description information of a data set mapped to the data characteristic information.

In an implementation, the validity time information of the first operating rule may be determined based on occurrence time information of a first service.

In an implementation, the second communication device receives a first data operating rule and/or time period information from the third communication device.

In an implementation, based on the data characteristic information of the first service data, it can be identified whether the received data is the first service data or not.

In an implementation, the second communication device receives a first data operating rule and/or time period information from the third communication device.

In an implementation, based on the data characteristic information of the first service data, it can be identified whether the received data is the first service data or not.

In an implementation, the information for indicating to reorder the data packets includes: information for indicating to reorder the data packets based on timestamps in second header information of the data packets.

In an implementation, the second header information includes: timestamp information.

In an implementation, the operation effects for the data packets can be improved by performing an operation on the data packet according to the first operating rule.

In this embodiment of this application, the second communication device receives the data packet, and the second communication device performs the second operation on the received data packet, where the second operation includes at least one of the following: identifying whether the data packet is the first service data or not; and adding the target information matching the first service data to the first header of the first service data. This can assist the first communication device in performing QoS control operation on the data packets, thereby improving QoS control effects.

Referring to FIG. 5, an embodiment of this application provides an information transmission method, and the method is applied to a third communication device. The third communication device includes but is not limited to: a CN network element, such as an SMF. The method includes the following steps.

Step 501: The third communication device performs a third operation.

The third operation includes at least one of the following:
performing a data set mapping operation;
determining a first operating rule;
determining a validity time of the first operating rule;
determining first information and/or index information for indicating a value of the first information;
sending the first operating rule, or sending the first operating rule and the validity time of the first operating rule; and
sending the first information and/or the index information for indicating the value of the first information;
where
the first operating rule includes at least one of the following:
   data characteristic information;
   target information corresponding to the data characteristic information;
   operation information for indicating to add target information to data that matches the data characteristic information;
   information for indicating to reorder data packets;
   information for indicating to copy second header information of the data packet to the first header of the data packet; and
   a data set mapping rule; where
   the first information includes at least one of the following: data description information of a data packet;
   data set association information; and
   first operation indication information.

In an implementation, the data set mapping operation is specifically as described in the embodiment of a fourth communication device (for example, a PCF), and details are not repeated herein.

In an implementation, the target information corresponding to the data characteristic information is description information of a data set mapped to the data characteristic information.

In an implementation, the validity time of the first operating rule may be determined based on occurrence time information of a first service.

In an implementation, the third communication device sends the first information to a first communication device, and/or sends the first data operating rule to a second communication device.

In this embodiment of this application, the first operating rule and the first information are determined, and therefore, during operation on the data packets, the operation effects for the data packets can be improved.

In an implementation, for the first information, reference may be made to the related description in the embodiment shown in FIG. 3; and details are not repeated herein.

Optionally, the performing a third operation includes:
obtaining third information, where the third information includes at least one of the following: first policy information, validity time information of the first policy information, and fifth information; and
performing the third operation based on the third information; where
the first policy information includes at least one of the following:
   data characteristic information;
   target information corresponding to the data characteristic information;
   operation information for indicating to add target information to data that matches the data characteristic information;
   information for indicating to reorder data packets;
   information for indicating to copy second header information of the data packet to the first header of the data packet;
   first information corresponding to the data characteristic information; and
   a data set mapping rule;
   where
   the fifth information includes at least one of the following:
      data characteristic information of first service data;
      occurrence time information of a first service; and
      first information corresponding to the first service data;
      where
      the target information includes at least one of the following: first information, and index information for indicating a value of the first information.

In an implementation, the validity time information of the first policy information may be determined based on occurrence time information of a first service.

In an implementation, the third communication device receives the third information sent by the fourth communication device.

In this embodiment of this application, the first operating rule and the first information are determined, and therefore, during QoS control operation on the data packets, the QoS control effects for the data packets can be improved.

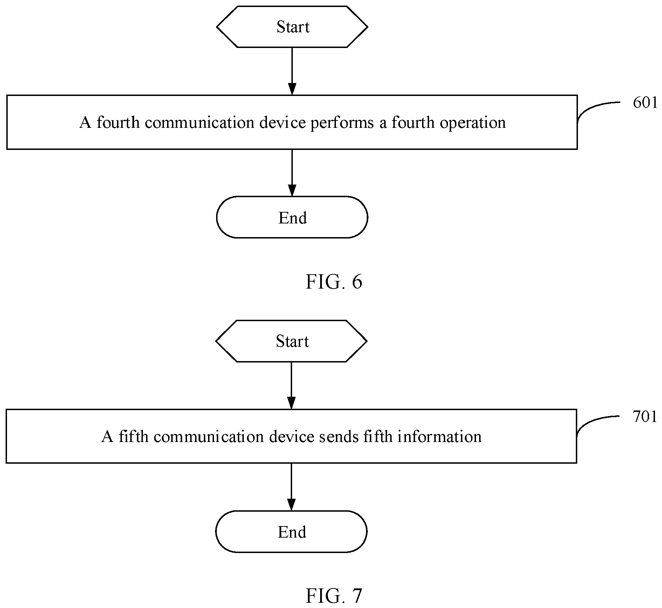

Referring to FIG. 6, an embodiment of this application provides an information transmission method, and the method is applied to a fourth communication device. The fourth communication device includes but is not limited to: a CN network element, such as a PCF. The method includes the following steps.

Step 601: The fourth communication device performs a fourth operation.

The fourth operation includes at least one of the following:
performing a data set mapping operation;
determining first policy information;
determining validity time information of the first policy information; and
sending the first policy information, or sending the first policy information and the validity time information of the first policy information; where
the first policy information includes at least one of the following:
   data characteristic information;
   target information corresponding to the data characteristic information;
   operation information for indicating to add target information to data that matches the data characteristic information;
   information for indicating to reorder data packets;
   information for indicating to copy second header information of the data packet to the first header of the data packet;
   first information corresponding to the data characteristic information; and
   a data set mapping rule;
   where
   the target information includes at least one of the following: first information, and index information for indicating a value of the first information.

The first information includes at least one of the following: data description information of a data packet;
data set association information; and
first operation indication information.

In an implementation, the target information corresponding to the data characteristic information is description information of a data set mapped to the data characteristic information.

In an implementation, the fourth communication device sends the first policy information to a first communication device, a second communication device, or a third communication device, or sends the first policy information and the validity time information of the first policy information.

In an implementation, the fourth communication device sends the first data operation policy to the third communication device.

In an implementation, the validity time information of the first policy information may be determined based on occurrence time information of a first service.

In an implementation, the first policy information and the first information are determined, and therefore, during operation on the data packets, the operation effects on the data packets can be improved.

In an implementation, for the first information, reference may be made to the related description in the embodiment shown in FIG. 2; and details are not repeated herein.

Optionally, the data set mapping rule includes at least one of the following:
data characteristic information, description information of a data set, information for identifying the data set mapping rule, and a priority of the data set mapping rule.

In an implementation, the data characteristic information indicates that a data packet matching the data characteristic information is mapped to a data set indicated by the description information of the data set.

In an implementation, the data set is a default data set, which is used to map data that does not match the data characteristic information. When a plurality of data sets are present in one data tunnel, the default data set has the lowest importance level.

Optionally, the data set mapping operation includes at least one of the following:
mapping data satisfying at least one of the following to different data sets: data of different data frames, data of different types of data frames, data of data frames of different importance levels, data of different types, data of different importance levels, data of different types in a same data frame, and data of different importance levels in the same data frame;
mapping data satisfying at least one of the following to a same data set: data of a same data frame, data of data frames of a same type, data of data frames of a same importance level, data of a same type, and data of a same importance level (including data of data frames with a same importance level but different types, such as data of P frame and B frame, which may be mapped to a data set for a non-I frame);
mapping an importance level of a data frame or an importance level of data to an importance level of a data frame;
in a case that a data frame A depends on a data frame B, and the data frame A and the data frame B are mapped to different data sets, setting a priority of the data set of the data frame A to be higher than a priority of the data set of the data frame B; and
in a case that data A depends on data B, and the data A and the data B are mapped to different data sets, setting a priority of the data set of the data A to be higher than a priority of the data set of the data B, where the data A and the data B have a same data frame.

In an implementation, the data packet of the same importance level includes data of data frames with a same importance level but different types, such as data of P frame and B frame, which may be mapped to a data set for a non-I frame.

In an implementation, the data frame A may be a data frame to which the foregoing data packet belongs.

In an implementation, the data A may be data to which the foregoing data packet belongs.

Optionally, the determining, by the fourth communication device, a first data operation policy includes:
determining, by the fourth communication device, the first data operation policy based on fifth information.

Optionally, the fourth operation further includes: a related operation of determining an occurrence time of the first service.

The related operation of determining an occurrence time of the first service includes at least one of the following:
generating the validity time information of the first policy information or the first time period information in the first information based on the occurrence time information of the first service.

In an implementation, the data characteristic information in the first policy information is generated based on the data characteristic information of the first service data.

In an implementation, the data set association information in the first information is generated based on the data association information.

In an implementation, the fifth information includes at least one of the following:
data characteristic information of first service data;
occurrence time information of a first service; and
first information corresponding to the first service data.

In an implementation, the fourth communication device receives the fifth information from a fifth communication device. The fifth information may be received directly or indirectly from other forwarding devices (such as a network exposure function (Network Exposure Function, NEF)).

In this embodiment of this application, the first policy information and the first information are determined, and therefore, during QoS control operation on the data packets, the QoS control effects for the data packets can be improved.

Referring to FIG. 7, an embodiment of this application provides an information transmission method, and the method is applied to a fifth communication device. The fifth communication device includes but is not limited to at least one of the following: a CN network element (such as an AF) or UE. The method includes the following steps.

Step 701: The fifth communication device sends fifth information, where the fifth information includes at least one of the following:
data characteristic information of first service data;
occurrence time information of a first service; and
first information corresponding to the first service data;
where
the first information includes at least one of the following:
   data description information of a data packet;
   data set association information; and
   first operation indication information.

In an implementation, the fifth communication device may include an AF or UE.

In an implementation, the fifth communication device may send the fifth information to the fourth communication device.

In an implementation, the data characteristic information of the first service data, the occurrence time information of the first service, and the first information corresponding to the first service data are sent; and therefore, the QoS control operation can be performed on the data packets based on such information, improving QoS control effects for the data packets.

In an implementation, for the first information, reference may be made to the related description in the embodiment shown in FIG. 3; and details are not repeated herein.

In an implementation, the first information corresponding to the first service data includes first information corresponding to the data characteristic information of the first service data.

Optionally, the data characteristic information includes at least one of the following: service description information, data characteristic description, second header information corresponding to the data characteristic information, and information about a protocol to which the data characteristic information belongs, layer information of a protocol to which the data characteristic information belongs, and association information of data;
and/or
the occurrence time information of the first service includes at least one of the following: start time, end time, and duration.

In an implementation, the data characteristic description may be type information of the data frame, such as I frame, P frame, B frame, left-eye frame, and right-eye frame.

In an implementation, the information about a protocol to which the data characteristic information belongs may be MPEG protocol information, RTP protocol information, GTP protocol information, or GTP-U protocol information.

In an implementation, the occurrence time information of the first service includes a start time of the first service, an end time of the first service, and duration of the first service.

In this embodiment of this application, the data characteristic information of the first service data, the occurrence time information of the first service, and the first information corresponding to the first service data are sent; and therefore, the QoS control operation can be performed on the data packets based on such information, improving QoS control effects for the data packets.

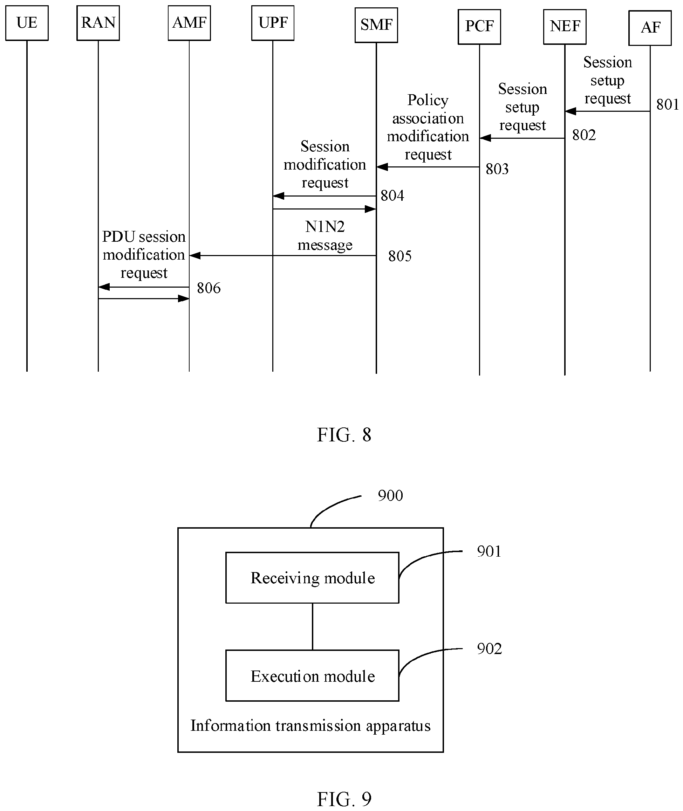

The following uses the embodiment shown in FIG. 8 to describe the information transmission method provided by the embodiments of this application.

As shown in FIG. 8, the method includes the following steps.

Step 801: An AF sends an AF session setup request to an NEF.

The session setup request may include fifth information (specifically as described in the embodiment of the fifth communication device), for example, the fifth information includes at least one of the following:
data characteristic information of first service data;
occurrence time information of a first service; and
first information corresponding to the first service data;
where
the first information includes at least one of the following:
   data description information of a data packet;
   data set association information; and
   first operation indication information.

Step 802: The NEF sends an AF session setup request to a PCF.

Step 803: The PCF sends a policy association modification request to an SMF.

The policy association modification request may include first policy information, or include first policy information and validity time information of the first policy information.

The first policy information includes at least one of the following:
data characteristic information;
target information corresponding to the data characteristic information;
operation information for indicating to add target information to data that matches the data characteristic information;
information for indicating to reorder data packets;
information for indicating to copy second header information of the data packet to the first header of the data packet;
first information corresponding to the data characteristic information; and
a data set mapping rule;
where
the target information includes at least one of the following: first information, and index information for indicating a value of the first information.

The first information includes at least one of the following:
data description information of a data packet;
data set association information; and
first operation indication information.

Step 804: The SMF sends a session modification request to a UPF.

The session modification request may include: a first operating rule, or a first operating rule and a validity time of the first operating rule.

The session modification request may also include:
first information and/or index information for indicating a value of the first information.

The first information includes at least one of the following:
data description information of a data packet;
data set association information; and
first operation indication information.

Step 805: The SMF sends an N1N2 message to an AMF.

The N1N2 message may include: target information, and the target information may include at least one of the following: first information, and index information for indicating a value of the first information.

Step 806: The AMF sends a PDU session modification request to a RAN.

The PDU session modification request may include at least one of the following: first information, and index information for indicating a value of the first information.

Referring to FIG. 9, FIG. 9 is a structural diagram of an information transmission apparatus according to an embodiment of this application. As shown in FIG. 8, the information transmission apparatus 900 includes:
a receiving module 901, configured to receive first information and/or index information for indicating a value of the first information, where the first information includes at least one of the following:
data description information of a data packet;
data set association information; and
first operation indication information; and
an execution module 902, configured to perform a quality of service QoS control operation on a data packet based on the first information and/or the index information for indicating the value of the first information.

Optionally, the data description information of the data packet includes at least one of the following:
description information of a data set to which the data packet belongs and/or index information for indicating the description information of the data set to which the data packet belongs;
information for identifying the data packet;
type information of the data packet;
importance level of the data packet; and
timestamp information of the data packet.

Optionally, the description information of the data set includes at least one of the following:
information for identifying the data set;
importance level information of the data set;
type information of the data set;
label information of the data set; and
a sequence number of the data set.

Optionally, the information for identifying the data set includes at least one of the following:
index information for indicating the description information of the data set;
importance level information of the data set;
type information of the data set;
label information of the data set; and
a sequence number of the data set.

Optionally, the data set association information includes at least one of the following:
description information of a data set that data set A depends on;
description information of a data set dependent on data set A;
description information of a data set associated with a data set to which the data packet belongs;
description information of data sets having an association relationship; and
description information of a data set group;
where
the data set group includes two or more data sets having an association relationship.

Optionally, the first operation indication information includes: operation information; or
the first operation indication information includes: operation information and at least one of the following:
description information of third data and/or description information of fourth data;
description information of a third data set and/or description information of a fourth data set;
description information of a fifth data set;
description information of a first data set group;
first time period; and
information about a timestamp difference range;
where
the first time period is used to indicate one of the following: the operation information being executed within the first time period, and a validity time period of the operation information.

Optionally, the description information of the third data and the description information of the fourth data are used to indicate: dropping or skipping sending the fourth data in a case that the third data is lost or fails to be sent;
and/or
the description information of the third data is used to indicate: in a case that the third data is lost or fails to be sent, dropping or skipping sending data that satisfies at least one of the following: other data dependent on the third data in a same data set; other data associated with the third data in the same data set; other data in the same data set; and other data whose importance level is lower than that of the third data in the same data set; where the same data set is a data set to which the third data belongs;
   and/or
the description information of the fourth data is used to indicate: in a case that data satisfying a first condition is lost or fails to be sent, dropping or skipping sending the fourth data; where the first condition includes at least one of the following: other data dependent on the fourth data in a same data set; other data associated with the fourth data in the same data set; other data in the same data set; and other data whose importance level is higher than that of the fourth data in the same data set; where the same data set is a data set to which the fourth data belongs;
   and/or
the description information of the third data set and the description information of the fourth data set are used to indicate: dropping or skipping sending data of the fourth data set in a case that the third data set is lost or fails to be sent;
   and/or
the description information of the third data set is used to indicate: in a case that the third data set is lost or fails to be sent, dropping or skipping sending data that satisfies at least one of the following: data of a data set dependent on the third data set; data of a data set that has an association relationship with a first data set; and data of a data set whose importance level is lower than that of the third data set;
   and/or
the description information of the fourth data set is used to indicate: in a case that a data set satisfying a second condition is lost or fails to be sent, dropping or skipping sending data of the fourth data set; where the second condition includes at least one of the following: a data set on which the fourth data set depends; a data set associated with the fourth data set; and a data set whose importance level is higher than that of the fourth data set;
   and/or
the description information of the fifth data set is used to indicate: a data set to which the operation information is applied;
   and/or
the description information of the first data set group is used to indicate: data sets to which the operation information is applied.

Optionally, the operation information is used to indicate at least one of the following:
performing an operation of dropping or not sending a data packet;
performing a collaborative scheduling operation on data packets;
performing a reordering operation on data packets;
sending data packets based on importance levels;
performing QoS guarantee based on a granularity of data set; and
prioritizing data with a higher importance level in a same data tunnel.

Optionally, the QoS control operation includes at least one of the following:
performing an operation of dropping or not sending a data packet;
performing a collaborative scheduling operation on data packets;
performing a reordering operation on data packets;
sending data packets based on importance levels;
performing QoS guarantee based on a granularity of data set; and
prioritizing data with a higher importance level in a same data tunnel.

Optionally, the performing an operation of dropping or not sending a data packet includes at least one of the following:
in a case that first data is lost or fails to be sent, dropping or skipping sending data that satisfies at least one of the following: other data dependent on the first data in a same data set; other data associated with the first data in the same data set; other data in the same data set; and other data whose importance level is lower than that of the first data in the same data set; where the same data set is a data set to which the first data belongs;
in a case that data satisfying a fourth condition is lost or fails to be sent, dropping or skipping sending second data; where the fourth condition includes at least one of the following: other data dependent on the second data in a same data set; other data associated with the second data in the same data set; other data in the same data set; and other data whose importance level is higher than that of the second data in the same data set; where the same data set is a data set to which the second data belongs;
in a case that a first data set is lost or fails to be sent, dropping or skipping sending data that satisfies at least one of the following: data of a data set dependent on the first data set; data of a data set that has an association relationship with the first data set; and data of a data set whose importance level is lower than that of the third data set;
in a case that a data set satisfying a fifth condition is lost or fails to be sent, dropping or skipping sending data of a second data set; where the fifth condition includes at least one of the following: a data set on which the second data set depends; a data set associated with the second data set; and a data set whose importance level is higher than that of the second data set;
in a case that the third data is lost or fails to be sent, dropping or skipping sending the fourth data;
in a case that the third data is lost or fails to be sent, dropping or skipping sending data that satisfies at least one of the following: other data dependent on the third data in a same data set; other data associated with the third data in the same data set; other data in the same data set; and other data whose importance level is lower than that of the third data in the same data set; where the same data set is a data set to which the third data belongs;
in a case that data satisfying a sixth condition is lost or fails to be sent, dropping or skipping sending the fourth data; where the sixth condition includes at least one of the following: other data dependent on the fourth data in a same data set; other data associated with the fourth data in the same data set; other data in the same data set; and other data whose importance level is higher than that of the fourth data in the same data set; where the same data set is a data set to which the fourth data belongs;
in a case that the third data set is lost or fails to be sent, dropping or skipping sending the fourth data set;
in a case that the third data set is lost or fails to be sent, dropping or skipping sending data that satisfies at least one of the following: data of another data set dependent on the third data set; data of another data set that has an association relationship with the first data set; and data of a data set whose importance level is lower than that of the third data set;
in a case that a data set satisfying a seventh condition is lost or fails to be sent, dropping or skipping sending data of the fourth data set; where the seventh condition includes at least one of the following: a data set on which the fourth data set depends; a data set associated with the fourth data set; and a data set whose importance level is higher than that of the fourth data set;
   and/or
the performing a reordering operation on data packets includes: reordering data packets of data sets and/or timestamps of data packets based on importance level of data set and/or data set association information.

Optionally, the first data is one of the following: any data in a data set, and data having an association relationship with the second data;
and/or
the second data is one of the following: any data in a data set, data having an association relationship with the first data;
   and/or
the data set is one of the following: any data set in a data tunnel, the third data set included in the first operation indication information, the fourth data set included in the first operation indication information, the fifth data set included in the first operation indication information, or any data set in the first data set group included in the first operation indication information;
   and/or
the first data set is one of the following: any data set in a data tunnel, the fifth data set included in the first operation indication information, or any data set in the first data set group included in the first operation indication information, and a data set having an association relationship with the second data set;
   and/or
the second data set is one of the following: any data set in a data tunnel, the fifth data set included in the first operation indication information, or any data set in the first data set group included in the first operation indication information, and a data set having an association relationship with the first data set.

Optionally, the performing a collaborative scheduling operation on data packets includes: performing the collaborative scheduling operation on data packets satisfying a third condition; where
the third condition includes at least one of the following:
data sets to which the data packets belong are the same;
data sets to which the data packets belong have an association relationship or data sets to which the data packets belong have a dependency relationship;
timestamps of the data packets are the same or difference times of timestamps are within a timestamp difference range;
data sets to which the data packets belong match a data set indicated by the description information of the fifth data set in the first operation indication information; and
data sets to which the data packets belong match a data set indicated by the description information of the first data set group in the first operation indication information.

Optionally, the performing a reordering operation on data packets includes: reordering the data packets based on at least one of the following: importance level of data set, data set association information, and timestamp of data packet;
and/or
the importance level in the sending data packets based on importance level is at least one of the following: importance level of data packet, and importance level of data set.

Optionally, the obtaining, by a first communication device, first information and/or index information for indicating a value of the first information includes one of the following:
receiving, from control plane signaling and/or a first header of a data packet, the first information and/or the index information for indicating the value of the first information; or
obtaining the first information based on a local configuration; where
the first header of the data packet is a header of a first protocol.

Optionally, the receiving, from control plane signaling and/or a first header of a data packet, the first information and/or the index information for indicating the value of the first information includes at least one of the following:
receiving data description information of the data packet from the first header of the data packet, and/or receiving, from the control plane signaling, other content than the data description information of the data packet in the first information;
receiving, from the control plane signaling, the index information for indicating the value of the first information; and
receiving, from the first header of the data packet, the index information for indicating the value of the first information.

The indication information transmission apparatus in this embodiment of this application may be an apparatus, or an apparatus or electric device having an operating system, or may be a component, an integrated circuit, or a chip in the first communication device.

The indication information transmission apparatus provided in this embodiment of this application can implement the processes implemented in the method embodiment in FIG. 3, with the same technical effects achieved. To avoid repetition, details are not described herein again.

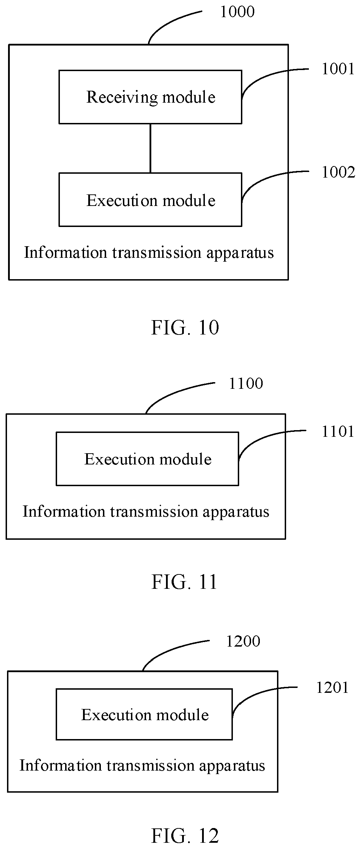

Referring to FIG. 10, FIG. 10 is a structural diagram of an information transmission apparatus according to an embodiment of this application. As shown in FIG. 10, the information transmission apparatus 1000 includes:
a receiving module 1001, configured to receive a data packet; and
an execution module 1002, configured to perform a second operation on the received data packet, where the second operation includes at least one of the following:
   identifying whether the data packet is data that matches data characteristic information;
   adding target information matching the data characteristic information to a first header of a data packet that matches the data characteristic information;
   adding target information corresponding to a default data set to a first header of a data packet not matching the data characteristic information;
   adding the target information corresponding to the default data set to a first header of a data packet that does not match data characteristic information in any non-default data set mapping rule;
   reordering data packets; and
   performing an operation of mapping the data packet to a data set; where
   the target information includes at least one of the following: first information, and index information for indicating a value of the first information; and
   the first information includes at least one of the following:
      data description information of a data packet;
      data set association information; and
      first operation indication information.

Optionally, the operation of identifying whether the data packet is data matching data characteristic information includes at least one of the following:
based on second-protocol header information of the data packet, identifying whether the data packet is data matching the data characteristic information.

Optionally, the first header indicates a first-protocol header, and the first protocol includes at least one of the following: an interface protocol between a first communication device and the second communication device.

Optionally, the performing, by the second communication device, a second operation on the received data includes:
obtaining, by the second communication device, a first operating rule and/or validity time information of the first operating rule, and performing, by the second communication device, the second operation on the received data according to the first operating rule and/or the validity time information of the first operating rule;
where
the first operating rule includes at least one of the following:
   data characteristic information;
   target information corresponding to the data characteristic information;
   operation information for indicating to add target information to data that matches the data characteristic information;
   information for indicating to reorder data packets;
   information for indicating to copy second header information of the data packet to the first header of the data packet; and
   a data set mapping rule.

The indication information transmission apparatus in this embodiment of this application may be an apparatus, or an apparatus or electric device having an operating system, or may be a component, an integrated circuit, or a chip in the second communication device.

The indication information transmission apparatus provided in this embodiment of this application can implement the processes implemented in the method embodiment in FIG. 4, with the same technical effects achieved. To avoid repetition, details are not described herein again.

Referring to FIG. 11, FIG. 11 is a structural diagram of an information transmission apparatus according to an embodiment of this application. As shown in FIG. 11, the information transmission apparatus 1100 includes:
an execution module 1101, configured to perform a third operation; where
the third operation includes at least one of the following:
   performing a data set mapping operation;
   determining a first operating rule;
   determining a validity time of the first operating rule;
   determining first information and/or index information for indicating a value of the first information;
   sending the first operating rule, or sending the first operating rule and the validity time of the first operating rule; and
   sending the first information and/or the index information for indicating the value of the first information;
   where
   the first operating rule includes at least one of the following:
      data characteristic information;
      target information corresponding to the data characteristic information;
      operation information for indicating to add target information to data that matches the data characteristic information;
      information for indicating to reorder data packets;
      information for indicating to copy second header information of the data packet to the first header of the data packet; and
      a data set mapping rule; where
      the first information includes at least one of the following: data description information of a data packet;
      data set association information; and
      first operation indication information.

Optionally, the performing a third operation includes:
obtaining third information, where the third information includes at least one of the following: first policy information, validity time information of the first policy information, and fifth information; and
performing the third operation based on the third information; where
the first policy information includes at least one of the following:
   data characteristic information;
   target information corresponding to the data characteristic information;
   operation information for indicating to add target information to data that matches the data characteristic information;
   information for indicating to reorder data packets;
   information for indicating to copy second header information of the data packet to the first header of the data packet;
   first information corresponding to the data characteristic information; and
   a data set mapping rule;
   where
   the fifth information includes at least one of the following:
      data characteristic information of first service data;
      occurrence time information of a first service; and
      first information corresponding to the first service data;
      where
      the target information includes at least one of the following: first information, and index information for indicating a value of the first information.

The indication information transmission apparatus in this embodiment of this application may be an apparatus, or an apparatus or electric device having an operating system, or may be a component, an integrated circuit, or a chip in the third communication device.

The indication information transmission apparatus provided in this embodiment of this application can implement the processes implemented in the method embodiment in FIG. 5, with the same technical effects achieved. To avoid repetition, details are not described herein again.

Referring to FIG. 12, FIG. 12 is a structural diagram of an information transmission apparatus according to an embodiment of this application. As shown in FIG. 12, the information transmission apparatus 1200 includes:
an execution module 1201, configured to perform a fourth operation; where
the fourth operation includes at least one of the following:
   performing a data set mapping operation;
   determining first policy information;
   determining validity time information of the first policy information; and
   sending the first policy information, or sending the first policy information and the validity time information of the first policy information; where
   the first policy information includes at least one of the following:
      data characteristic information;
      target information corresponding to the data characteristic information;
      operation information for indicating to add target information to data that matches the data characteristic information;
      information for indicating to reorder data packets;
      information for indicating to copy second header information of the data packet to the first header of the data packet;
      first information corresponding to the data characteristic information; and
      a data set mapping rule;
      where
      the target information includes at least one of the following: first information, and index information for indicating a value of the first information; and
      the first information includes at least one of the following: data description information of a data packet;
      data set association information; and
      first operation indication information.

Optionally, the data set mapping rule includes at least one of the following:
data characteristic information, description information of a data set, information for identifying the data set mapping rule, and a priority of the data set mapping rule.

Optionally, the data set mapping operation includes at least one of the following:
mapping data satisfying at least one of the following to different data sets: data of different data frames, data of different types of data frames, data of data frames of different importance levels, data of different types, data of different importance levels, data of different types in a same data frame, and data of different importance levels in the same data frame;
mapping data satisfying at least one of the following to a same data set: data of a same data frame, data of data frames of a same type, data of data frames of a same importance level, data of a same type, and data of a same importance level;
mapping an importance level of a data frame or an importance level of data to an importance level of a data frame;
in a case that a data frame A depends on a data frame B, and the data frame A and the data frame B are mapped to different data sets, setting a priority of the data set of the data frame A to be higher than a priority of the data set of the data frame B; and
in a case that data A depends on data B, and the data A and the data B are mapped to different data sets, setting a priority of the data set of the data A to be higher than a priority of the data set of the data B, where the data A and the data B have a same data frame.

Optionally, the determining, by the fourth communication device, a first data operation policy includes:
obtaining fifth information; and
determining, by the fourth communication device, the first data operation policy based on the fifth information.

The indication information transmission apparatus in this embodiment of this application may be an apparatus, or an apparatus or electric device having an operating system, or may be a component, an integrated circuit, or a chip in the fourth communication device.

The indication information transmission apparatus provided in this embodiment of this application can implement the processes implemented in the method embodiment in FIG. 6, with the same technical effects achieved. To avoid repetition, details are not described herein again.

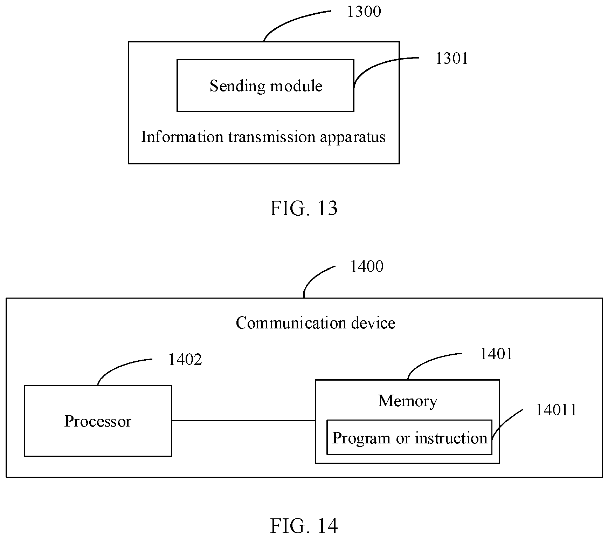

Referring to FIG. 13, FIG. 13 is a structural diagram of an information transmission apparatus according to an embodiment of this application. As shown in FIG. 13, the information transmission apparatus 1300 includes:
a sending module 1301, configured to send fifth information, where the fifth information includes at least one of the following:
data characteristic information of first service data;
occurrence time information of a first service; and
first information corresponding to the first service data;
where
the first information includes at least one of the following:
   data description information of a data packet;
   data set association information; and
   first operation indication information.

Optionally, the data characteristic information includes at least one of the following: service description information, data characteristic description, second header information corresponding to the data characteristic information, and information about a protocol to which the data characteristic information belongs, layer information of a protocol to which the data characteristic information belongs, and association information of data; and/or
occurrence time information of the first service includes at least one of the following: start time, end time, and duration.

The indication information transmission apparatus in this embodiment of this application may be an apparatus, or an apparatus or electric device having an operating system, or may be a component, an integrated circuit, or a chip in the fifth communication device.

The indication information transmission apparatus provided in this embodiment of this application can implement the processes implemented in the method embodiment in FIG. 7, with the same technical effects achieved. To avoid repetition, details are not described herein again.

Referring to FIG. 14, FIG. 14 is a structural diagram of a communication device according to an embodiment of the present invention. As shown in FIG. 14, the communication device 1400 includes a memory 1401, a processor 1402, and a program or instructions 14011 stored on the memory 1401 and capable of running on the processor 1402.

When the communication device 1400 serves as the first communication device in the foregoing method embodiment, the following steps are implemented when the program or instructions 14011 are executed by the processor 1402:
receiving first information and/or index information for indicating a value of the first information, where the first information includes at least one of the following:
data description information of a data packet;
data set association information; and
first operation indication information; and
an execution module, configured to perform a quality of service QoS control operation on a data packet based on the first information and/or the index information for indicating the value of the first information.

Optionally, the data description information of the data packet includes at least one of the following:
description information of a data set to which the data packet belongs and/or index information for indicating the description information of the data set to which the data packet belongs;
information for identifying the data packet;
type information of the data packet;
importance level of the data packet; and
timestamp information of the data packet.

Optionally, the description information of the data set includes at least one of the following:
information for identifying the data set;
importance level information of the data set;
type information of the data set;
label information of the data set; and
a sequence number of the data set.

Optionally, the information for identifying the data set includes at least one of the following:
index information for indicating the description information of the data set;
importance level information of the data set;
type information of the data set;
label information of the data set; and
a sequence number of the data set.

Optionally, the data set association information includes at least one of the following:
description information of a data set that data set A depends on;
description information of a data set dependent on data set A;
description information of a data set associated with a data set to which the data packet belongs;
description information of data sets having an association relationship; and
description information of a data set group; where
the data set group includes two or more data sets having an association relationship.

Optionally, the first operation indication information includes: operation information; or
the first operation indication information includes: operation information and at least one of the following:
description information of third data and/or description information of fourth data;
description information of a third data set and/or description information of a fourth data set;
description information of a fifth data set;
description information of a first data set group;
first time period; and
information about a timestamp difference range; where
the first time period is used to indicate one of the following: the operation information being executed within the first time period, and a validity time period of the operation information.

Optionally, the description information of the third data and the description information of the fourth data are used to indicate: dropping or skipping sending the fourth data in a case that the third data is lost or fails to be sent;
and/or
the description information of the third data is used to indicate: in a case that the third data is lost or fails to be sent, dropping or skipping sending data that satisfies at least one of the following: other data dependent on the third data in a same data set; other data associated with the third data in the same data set; other data in the same data set; and other data whose importance level is lower than that of the third data in the same data set; where the same data set is a data set to which the third data belongs;
   and/or
the description information of the fourth data is used to indicate: in a case that data satisfying a first condition is lost or fails to be sent, dropping or skipping sending the fourth data; where the first condition includes at least one of the following: other data dependent on the fourth data in a same data set; other data associated with the fourth data in the same data set; other data in the same data set; and other data whose importance level is higher than that of the fourth data in the same data set; where the same data set is a data set to which the fourth data belongs;
   and/or
the description information of the third data set and the description information of the fourth data set are used to indicate: dropping or skipping sending data of the fourth data set in a case that the third data set is lost or fails to be sent;
   and/or
the description information of the third data set is used to indicate: in a case that the third data set is lost or fails to be sent, dropping or skipping sending data that satisfies at least one of the following: data of a data set dependent on the third data set; data of a data set that has an association relationship with a first data set; and data of a data set whose importance level is lower than that of the third data set;
   and/or
the description information of the fourth data set is used to indicate: in a case that a data set satisfying a second condition is lost or fails to be sent, dropping or skipping sending data of the fourth data set; where the second condition includes at least one of the following: a data set on which the fourth data set depends; a data set associated with the fourth data set; and a data set whose importance level is higher than that of the fourth data set;
   and/or
the description information of the fifth data set is used to indicate: a data set to which the operation information is applied;
   and/or
the description information of the first data set group is used to indicate: data sets to which the operation information is applied.

Optionally, the operation information is used to indicate at least one of the following:
performing an operation of dropping or not sending a data packet;
performing a collaborative scheduling operation on data packets;
performing a reordering operation on data packets;
sending data packets based on importance levels;
performing QoS guarantee based on a granularity of data set; and
prioritizing data with a higher importance level in a same data tunnel.

Optionally, the QoS control operation includes at least one of the following:
performing an operation of dropping or not sending a data packet;
performing a collaborative scheduling operation on data packets;
performing a reordering operation on data packets;
sending data packets based on importance levels;
performing QoS guarantee based on a granularity of data set; and
prioritizing data with a higher importance level in a same data tunnel.

Optionally, the performing an operation of dropping or not sending a data packet includes at least one of the following:
in a case that first data is lost or fails to be sent, dropping or skipping sending data that satisfies at least one of the following: other data dependent on the first data in a same data set; other data associated with the first data in the same data set; other data in the same data set; and other data whose importance level is lower than that of the first data in the same data set; where the same data set is a data set to which the first data belongs;
in a case that data satisfying a fourth condition is lost or fails to be sent, dropping or skipping sending second data; where the fourth condition includes at least one of the following: other data dependent on the second data in a same data set; other data associated with the second data in the same data set; other data in the same data set; and other data whose importance level is higher than that of the second data in the same data set; where the same data set is a data set to which the second data belongs;
in a case that a first data set is lost or fails to be sent, dropping or skipping sending data that satisfies at least one of the following: data of a data set dependent on the first data set; data of a data set that has an association relationship with the first data set; and data of a data set whose importance level is lower than that of the third data set;
in a case that a data set satisfying a fifth condition is lost or fails to be sent, dropping or skipping sending data of a second data set; where the fifth condition includes at least one of the following: a data set on which the second data set depends; a data set associated with the second data set; and a data set whose importance level is higher than that of the second data set;
in a case that the third data is lost or fails to be sent, dropping or skipping sending the fourth data;
in a case that the third data is lost or fails to be sent, dropping or skipping sending data that satisfies at least one of the following: other data dependent on the third data in a same data set; other data associated with the third data in the same data set; other data in the same data set; and other data whose importance level is lower than that of the third data in the same data set; where the same data set is a data set to which the third data belongs;
in a case that data satisfying a sixth condition is lost or fails to be sent, dropping or skipping sending the fourth data; where the sixth condition includes at least one of the following: other data dependent on the fourth data in a same data set; other data associated with the fourth data in the same data set; other data in the same data set; and other data whose importance level is higher than that of the fourth data in the same data set; where the same data set is a data set to which the fourth data belongs;
in a case that the third data set is lost or fails to be sent, dropping or skipping sending the fourth data set;
in a case that the third data set is lost or fails to be sent, dropping or skipping sending data that satisfies at least one of the following: data of another data set dependent on the third data set; data of another data set that has an association relationship with the first data set; and data of a data set whose importance level is lower than that of the third data set;
in a case that a data set satisfying a seventh condition is lost or fails to be sent, dropping or skipping sending data of the fourth data set; where the seventh condition includes at least one of the following: a data set on which the fourth data set depends; a data set associated with the fourth data set; and a data set whose importance level is higher than that of the fourth data set;
   and/or
the performing a reordering operation on data packets includes: reordering data packets of data sets and/or timestamps of data packets based on importance level of data set and/or data set association information.

Optionally, the first data is one of the following: any data in a data set, and data having an association relationship with the second data;
and/or
the second data is one of the following: any data in a data set, data having an association relationship with the first data;
   and/or
the data set is one of the following: any data set in a data tunnel, the third data set included in the first operation indication information, the fourth data set included in the first operation indication information, the fifth data set included in the first operation indication information, or any data set in the first data set group included in the first operation indication information;
   and/or
the first data set is one of the following: any data set in a data tunnel, the fifth data set included in the first operation indication information, or any data set in the first data set group included in the first operation indication information, and a data set having an association relationship with the second data set;
   and/or
the second data set is one of the following: any data set in a data tunnel, the fifth data set included in the first operation indication information, or any data set in the first data set group included in the first operation indication information, and a data set having an association relationship with the first data set.

Optionally, the performing a collaborative scheduling operation on data packets includes: performing the collaborative scheduling operation on data packets satisfying a third condition; where
the third condition includes at least one of the following:
data sets to which the data packets belong are the same;
data sets to which the data packets belong have an association relationship or data sets to which the data packets belong have a dependency relationship;
timestamps of the data packets are the same or difference times of timestamps are within a timestamp difference range;
data sets to which the data packets belong match a data set indicated by the description information of the fifth data set in the first operation indication information; and
data sets to which the data packets belong match a data set indicated by the description information of the first data set group in the first operation indication information.

Optionally, the performing a reordering operation on data packets includes: reordering the data packets based on at least one of the following: importance level of data set, data set association information, and timestamp of data packet;
and/or
the importance level in the sending data packets based on importance level is at least one of the following: importance level of data packet, and importance level of data set.

Optionally, the obtaining, by a first communication device, first information and/or index information for indicating a value of the first information includes one of the following:
receiving, from control plane signaling and/or a first header of a data packet, the first information and/or the index information for indicating the value of the first information; or
obtaining the first information based on a local configuration; where
the first header of the data packet is a header of a first protocol.

Optionally, the receiving, from control plane signaling and/or a first header of a data packet, the first information and/or the index information for indicating the value of the first information includes at least one of the following:
receiving data description information of the data packet from the first header of the data packet, and/or receiving, from the control plane signaling, other content than the data description information of the data packet in the first information;
receiving, from the control plane signaling, the index information for indicating the value of the first information; and
receiving, from the first header of the data packet, the index information for indicating the value of the first information.

When the communication device 1400 serves as the second communication device in the foregoing method embodiment, the following steps are implemented when the program or instructions 14011 are executed by the processor 1402:
receiving a data packet; and
performing a second operation on the received data packet, where the second operation includes at least one of the following:
   identifying whether the data packet is data that matches data characteristic information;
   adding target information matching the data characteristic information to a first header of a data packet that matches the data characteristic information;
   adding target information corresponding to a default data set to a first header of a data packet not matching the data characteristic information;
   adding the target information corresponding to the default data set to a first header of a data packet that does not match data characteristic information in any non-default data set mapping rule;
   reordering data packets; and
   performing an operation of mapping the data packet to a data set; where
   the target information includes at least one of the following: first information, and index information for indicating a value of the first information; and
   the first information includes at least one of the following:
      data description information of a data packet;
      data set association information; and
      first operation indication information.

Optionally, the operation of identifying whether the data packet is data matching data characteristic information includes at least one of the following:
based on second-protocol header information of the data packet, identifying whether the data packet is data matching the data characteristic information.

Optionally, the first header indicates a first-protocol header, and the first protocol includes at least one of the following: an interface protocol between a first communication device and the second communication device.

Optionally, the performing, by the second communication device, a second operation on the received data includes:
obtaining, by the second communication device, a first operating rule and/or validity time information of the first operating rule, and performing, by the second communication device, the second operation on the received data according to the first operating rule and/or the validity time information of the first operating rule;
where
the first operating rule includes at least one of the following:
   data characteristic information;
   target information corresponding to the data characteristic information;
   operation information for indicating to add target information to data that matches the data characteristic information;
   information for indicating to reorder data packets;
   information for indicating to copy second header information of the data packet to the first header of the data packet; and
   a data set mapping rule.

When the communication device 1400 serves as the third communication device in the foregoing method embodiment, the following steps are implemented when the program or instructions 14011 are executed by the processor 1402:
performing a third operation; where
the third operation includes at least one of the following:
   performing a data set mapping operation;
   determining a first operating rule;
   determining a validity time of the first operating rule;
   determining first information and/or index information for indicating a value of the first information;
   sending the first operating rule, or sending the first operating rule and the validity time of the first operating rule; and
   sending the first information and/or the index information for indicating the value of the first information;
   where
   the first operating rule includes at least one of the following:
      data characteristic information;
      target information corresponding to the data characteristic information;
      operation information for indicating to add target information to data that matches the data characteristic information;
      information for indicating to reorder data packets;
      information for indicating to copy second header information of the data packet to the first header of the data packet; and
      a data set mapping rule.

The first information includes at least one of the following: data description information of a data packet;
data set association information; and
first operation indication information.

Optionally, the performing a third operation includes:
obtaining third information, where the third information includes at least one of the following: first policy information, validity time information of the first policy information, and fifth information; and
performing the third operation based on the third information; where
the first policy information includes at least one of the following:
   data characteristic information;
   target information corresponding to the data characteristic information;
   operation information for indicating to add target information to data that matches the data characteristic information;
   information for indicating to reorder data packets;
   information for indicating to copy second header information of the data packet to the first header of the data packet;
   first information corresponding to the data characteristic information; and
   a data set mapping rule;
   where
   the fifth information includes at least one of the following:
      data characteristic information of first service data;
      occurrence time information of a first service; and
      first information corresponding to the first service data;
      where
      the target information includes at least one of the following: first information, and index information for indicating a value of the first information.

When the communication device 1400 serves as the fourth communication device in the foregoing method embodiment, the following steps are implemented when the program or instructions 14011 are executed by the processor 1402:
performing a fourth operation; where
the fourth operation includes at least one of the following:
   performing a data set mapping operation;
   determining first policy information;
   determining validity time information of the first policy information; and
   sending the first policy information, or sending the first policy information and the validity time information of the first policy information; where
   the first policy information includes at least one of the following:
      data characteristic information;
      target information corresponding to the data characteristic information;
      operation information for indicating to add target information to data that matches the data characteristic information;
      information for indicating to reorder data packets;
      information for indicating to copy second header information of the data packet to the first header of the data packet;
      first information corresponding to the data characteristic information; and
      a data set mapping rule;
      where
      the target information includes at least one of the following: first information, and index information for indicating a value of the first information; and
      the first information includes at least one of the following: data description information of a data packet;
      data set association information; and
      first operation indication information.

Optionally, the data set mapping rule includes at least one of the following:
data characteristic information, description information of a data set, information for identifying the data set mapping rule, and a priority of the data set mapping rule.

Optionally, the data set mapping operation includes at least one of the following:
mapping data satisfying at least one of the following to different data sets: data of different data frames, data of different types of data frames, data of data frames of different importance levels, data of different types, data of different importance levels, data of different types in a same data frame, and data of different importance levels in the same data frame;
mapping data satisfying at least one of the following to a same data set: data of a same data frame, data of data frames of a same type, data of data frames of a same importance level, data of a same type, and data of a same importance level;
mapping an importance level of a data frame or an importance level of data to an importance level of a data frame;
in a case that a data frame A depends on a data frame B, and the data frame A and the data frame B are mapped to different data sets, setting a priority of the data set of the data frame A to be higher than a priority of the data set of the data frame B; and
in a case that data A depends on data B, and the data A and the data B are mapped to different data sets, setting a priority of the data set of the data A to be higher than a priority of the data set of the data B, where the data A and the data B have a same data frame.

Optionally, the determining, by the fourth communication device, a first data operation policy includes:
obtaining fifth information; and
determining, by the fourth communication device, the first data operation policy based on the fifth information.

When the communication device 1400 serves as the fifth communication device in the foregoing method embodiment, the following steps are implemented when the program or instructions 14011 are executed by the processor 1402:
sending fifth information, where the fifth information includes at least one of the following:
data characteristic information of first service data;
occurrence time information of a first service; and
first information corresponding to the first service data;
where
the first information includes at least one of the following:
   data description information of a data packet;
   data set association information; and
   first operation indication information.

Optionally, the data characteristic information includes at least one of the following: service description information, data characteristic description, second header information corresponding to the data characteristic information, and information about a protocol to which the data characteristic information belongs, layer information of a protocol to which the data characteristic information belongs, and association information of data; and/or
occurrence time information of the first service includes at least one of the following: start time, end time, and duration.

An embodiment of this application further provides a readable storage medium, where a program or instructions are stored in the readable storage medium. When the program or instructions are executed by a processor, the processes of the foregoing embodiment of the information transmission method can be implemented, with the same technical effects achieved. To avoid repetition, details are not described herein again.

The processor is a processor in the terminal or the network device described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or instructions to implement the processes of the foregoing embodiments of the information transmission method, with the same technical effects achieved. To avoid repetition, details are not described herein again.

It should be understood that the chip in the embodiments of this application may also be referred to as a system-level chip, a system chip, a chip system, a system on chip, or the like.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An information transmission method, comprising:
receiving, by a first communication device, first information and/or index information for indicating a value of the first information, wherein the first information comprises at least one of the following:
data description information of a data packet;
data set association information; and
first operation indication information; and
performing, by the first communication device, a quality of service QoS control operation on a data packet based on the first information and/or the index information for indicating the value of the first information.

2. The method according to claim 1, wherein the data description information of the data packet comprises at least one of the following:
description information of a data set to which the data packet belongs and/or index information for indicating the description information of the data set to which the data packet belongs;
information for identifying the data packet;
type information of the data packet;
importance level of the data packet; and
timestamp information of the data packet.

3. The method according to claim 2, wherein the description information of the data set comprises at least one of the following:
information for identifying the data set;
importance level information of the data set;
type information of the data set;
label information of the data set; and
a sequence number of the data set.

4. The method according to claim 3, wherein the information for identifying the data set comprises at least one of the following:
index information for indicating the description information of the data set;
importance level information of the data set;
type information of the data set;
label information of the data set; and
a sequence number of the data set.

5. The method according to claim 1, wherein the data set association information comprises at least one of the following:
description information of a data set that data set A depends on;
description information of a data set dependent on data set A;
description information of a data set associated with a data set to which the data packet belongs;
description information of data sets having an association relationship; and
description information of a data set group; wherein
the data set group comprises two or more data sets having an association relationship.

6. The method according to claim 1, wherein the first operation indication information comprises: operation information; or
the first operation indication information comprises: operation information and at least one of the following:
description information of third data and/or description information of fourth data;
description information of a third data set and/or description information of a fourth data set;
description information of a fifth data set;
description information of a first data set group;
first time period; and
information about a timestamp difference range; wherein
the first time period is used to indicate one of the following: the operation information being executed within the first time period, and a validity time period of the operation information.

7. The method according to claim 6, wherein
the description information of the third data and the description information of the fourth data are used to indicate: dropping or skipping sending the fourth data in a case that the third data is lost or fails to be sent;
and/or
the description information of the third data is used to indicate: in a case that the third data is lost or fails to be sent, dropping or skipping sending data that satisfies at least one of the following: other data dependent on the third data in a same data set; other data associated with the third data in the same data set; other data in the same data set; and other data whose importance level is lower than that of the third data in the same data set; wherein the same data set is a data set to which the third data belongs;
and/or
the description information of the fourth data is used to indicate: in a case that data satisfying a first condition is lost or fails to be sent, dropping or skipping sending the fourth data; wherein the first condition comprises at least one of the following: other data dependent on the fourth data in a same data set; other data associated with the fourth data in the same data set; other data in the same data set; and other data whose importance level is higher than that of the fourth data in the same data set; wherein the same data set is a data set to which the fourth data belongs;
and/or
the description information of the third data set and the description information of the fourth data set are used to indicate: dropping or skipping sending data of the fourth data set in a case that the third data set is lost or fails to be sent;
and/or
the description information of the third data set is used to indicate: in a case that the third data set is lost or fails to be sent, dropping or skipping sending data that satisfies at least one of the following: data of a data set dependent on the third data set; data of a data set that has an association relationship with a first data set; and data of a data set whose importance level is lower than that of the third data set;
and/or
the description information of the fourth data set is used to indicate: in a case that a data set satisfying a second condition is lost or fails to be sent, dropping or skipping sending data of the fourth data set; wherein the second condition comprises at least one of the following: a data set on which the fourth data set depends; a data set associated with the fourth data set; and a data set whose importance level is higher than that of the fourth data set;
and/or
the description information of the fifth data set is used to indicate: a data set to which the operation information is applied;
and/or
the description information of the first data set group is used to indicate: data sets to which the operation information is applied.

8. The method according to claim 6, wherein the operation information is used to indicate at least one of the following:
performing an operation of dropping or not sending a data packet;
performing a collaborative scheduling operation on data packets;
performing a reordering operation on data packets;
sending data packets based on importance levels;
performing QoS guarantee based on a granularity of data set; and
prioritizing data with a higher importance level in a same data tunnel.

9. The method according to claim 1, wherein the QoS control operation comprises at least one of the following:
performing an operation of dropping or not sending a data packet;
performing a collaborative scheduling operation on data packets;
performing a reordering operation on data packets;
sending data packets based on importance levels;
performing QoS guarantee based on a granularity of data set; and
prioritizing data with a higher importance level in a same data tunnel.

10. The method according to claim 8 or 9, wherein the performing an operation of dropping or not sending a data packet comprises at least one of the following:
in a case that first data is lost or fails to be sent, dropping or skipping sending data that satisfies at least one of the following: other data dependent on the first data in a same data set; other data associated with the first data in the same data set; other data in the same data set; and other data whose importance level is lower than that of the first data in the same data set; wherein the same data set is a data set to which the first data belongs;
in a case that data satisfying a fourth condition is lost or fails to be sent, dropping or skipping sending second data; wherein the fourth condition comprises at least one of the following: other data dependent on the second data in a same data set; other data associated with the second data in the same data set; other data in the same data set; and other data whose importance level is higher than that of the second data in the same data set; wherein the same data set is a data set to which the second data belongs;
in a case that a first data set is lost or fails to be sent, dropping or skipping sending data that satisfies at least one of the following: data of a data set dependent on the first data set; data of a data set that has an association relationship with the first data set; and data of a data set whose importance level is lower than that of the third data set;
in a case that a data set satisfying a fifth condition is lost or fails to be sent, dropping or skipping sending data of a second data set; wherein the fifth condition comprises at least one of the following: a data set on which the second data set depends; a data set associated with the second data set; and a data set whose importance level is higher than that of the second data set;
in a case that the third data is lost or fails to be sent, dropping or skipping sending the fourth data;
in a case that the third data is lost or fails to be sent, dropping or skipping sending data that satisfies at least one of the following: other data dependent on the third data in a same data set; other data associated with the third data in the same data set; other data in the same data set; and other data whose importance level is lower than that of the third data in the same data set; wherein the same data set is a data set to which the third data belongs;
in a case that data satisfying a sixth condition is lost or fails to be sent, dropping or skipping sending the fourth data; wherein the sixth condition comprises at least one of the following: other data dependent on the fourth data in a same data set; other data associated with the fourth data in the same data set; other data in the same data set; and other data whose importance level is higher than that of the fourth data in the same data set; wherein the same data set is a data set to which the fourth data belongs;
in a case that the third data set is lost or fails to be sent, dropping or skipping sending the fourth data set;
in a case that the third data set is lost or fails to be sent, dropping or skipping sending data that satisfies at least one of the following: data of another data set dependent on the third data set; data of another data set that has an association relationship with the first data set; and data of a data set whose importance level is lower than that of the third data set;
in a case that a data set satisfying a seventh condition is lost or fails to be sent, dropping or skipping sending data of the fourth data set; wherein the seventh condition comprises at least one of the following: a data set on which the fourth data set depends; a data set associated with the fourth data set; and a data set whose importance level is higher than that of the fourth data set;
and/or
the performing a reordering operation on data packets comprises: reordering data packets of data sets and/or timestamps of data packets based on importance level of data set and/or data set association information.

11. The method according to claim 10, wherein
the first data is one of the following: any data in a data set, and data having an association relationship with the second data;
and/or
the second data is one of the following: any data in a data set, data having an association relationship with the first data;
and/or
the data set is one of the following: any data set in a data tunnel, the third data set comprised in the first operation indication information, the fourth data set comprised in the first operation indication information, the fifth data set comprised in the first operation indication information, or any data set in the first data set group comprised in the first operation indication information;
and/or
the first data set is one of the following: any data set in a data tunnel, the fifth data set comprised in the first operation indication information, or any data set in the first data set group comprised in the first operation indication information, and a data set having an association relationship with the second data set;
and/or
the second data set is one of the following: any data set in a data tunnel, the fifth data set comprised in the first operation indication information, or any data set in the first data set group comprised in the first operation indication information, and a data set having an association relationship with the first data set.

12. The method according to claim 8 or 9, wherein the performing a collaborative scheduling operation on data packets comprises: performing the collaborative scheduling operation on data packets satisfying a third condition; wherein
the third condition comprises at least one of the following:
data sets to which the data packets belong are the same;
data sets to which the data packets belong have an association relationship or data sets to which the data packets belong have a dependency relationship;
timestamps of the data packets are the same or difference times of timestamps are within a timestamp difference range;
data sets to which the data packets belong match a data set indicated by the description information of the fifth data set in the first operation indication information; and
data sets to which the data packets belong match a data set indicated by the description information of the first data set group in the first operation indication information.

13. The method according to claim 8 or 9, wherein
the performing a reordering operation on data packets comprises: reordering the data packets based on at least one of the following: importance level of data set, data set association information, and timestamp of data packet; and/or
the importance level in the sending data packets based on importance level is at least one of the following: importance level of data packet, and importance level of data set.

14. The method according to claim 1, wherein
the obtaining, by a first communication device, first information and/or index information for indicating a value of the first information comprises one of the following:
receiving, from control plane signaling and/or a first header of a data packet, the first information and/or the index information for indicating the value of the first information; or
obtaining the first information based on a local configuration; wherein
the first header of the data packet is a header of a first protocol.

15. The method according to claim 14, wherein the receiving, from control plane signaling and/or a first header of a data packet, the first information and/or the index information for indicating the value of the first information comprises at least one of the following:
receiving data description information of the data packet from the first header of the data packet, and/or receiving, from the control plane signaling, other content than the data description information of the data packet in the first information;
receiving, from the control plane signaling, the index information for indicating the value of the first information; and
receiving, from the first header of the data packet, the index information for indicating the value of the first information.

16. An information transmission method, comprising:
receiving, by a second communication device, a data packet; and
performing, by the second communication device, a second operation on the received data packet, wherein the second operation comprises at least one of the following:
identifying whether the data packet is data that matches data characteristic information;
adding target information matching the data characteristic information to a first header of a data packet that matches the data characteristic information;
adding target information corresponding to a default data set to a first header of a data packet not matching the data characteristic information;
adding the target information corresponding to the default data set to a first header of a data packet that does not match data characteristic information in any non-default data set mapping rule;
reordering data packets; and
performing an operation of mapping the data packet to a data set; wherein
the target information comprises at least one of the following: first information, and index information for indicating a value of the first information; and
the first information comprises at least one of the following:
data description information of a data packet;
data set association information; and
first operation indication information.

17. The method according to claim 16, wherein the operation of identifying whether the data packet is data matching data characteristic information comprises at least one of the following:
based on second-protocol header information of the data packet, identifying whether the data packet is data matching the data characteristic information.

18. The method according to claim 16, wherein the first header indicates a first-protocol header, and the first protocol comprises at least one of the following: an interface protocol between a first communication device and the second communication device.

19. The method according to claim 16, wherein the performing, by the second communication device, a second operation on the received data comprises:
obtaining, by the second communication device, a first operating rule and/or validity time information of the first operating rule, and performing, by the second communication device, the second operation on the received data according to the first operating rule and/or the validity time information of the first operating rule; wherein
the first operating rule comprises at least one of the following:
data characteristic information;
target information corresponding to the data characteristic information;
operation information for indicating to add target information to data that matches the data characteristic information;
information for indicating to reorder data packets;
information for indicating to copy second header information of the data packet to the first header of the data packet; and
a data set mapping rule.

20. An information transmission method, comprising:
performing, by a third communication device, a third operation; wherein
the third operation comprises at least one of the following:
performing a data set mapping operation;
determining a first operating rule;
determining a validity time of the first operating rule;
determining first information and/or index information for indicating a value of the first information;
sending the first operating rule, or sending the first operating rule and the validity time of the first operating rule; and
sending the first information and/or the index information for indicating the value of the first information; wherein
the first operating rule comprises at least one of the following:
data characteristic information;
target information corresponding to the data characteristic information;
operation information for indicating to add target information to data that matches the data characteristic information;
information for indicating to reorder data packets;
information for indicating to copy second header information of the data packet to the first header of the data packet; and
a data set mapping rule; wherein
the first information comprises at least one of the following:
data description information of a data packet;
data set association information; and
first operation indication information.

21. The method according to claim 20, wherein the performing a third operation comprises:
obtaining third information, wherein the third information comprises at least one of the following: first policy information, validity time information of the first policy information, and fifth information; and
performing the third operation based on the third information; wherein
the first policy information comprises at least one of the following:
data characteristic information;
target information corresponding to the data characteristic information;
operation information for indicating to add target information to data that matches the data characteristic information;
information for indicating to reorder data packets;
information for indicating to copy second header information of the data packet to the first header of the data packet;
first information corresponding to the data characteristic information; and
a data set mapping rule; wherein
the fifth information comprises at least one of the following:
data characteristic information of first service data;
occurrence time information of a first service; and
first information corresponding to the first service data; and
the target information comprises at least one of the following: first information, and index information for indicating a value of the first information.

22. An information transmission method, comprising:
performing, by a fourth communication device, a fourth operation; wherein
The fourth operation comprises at least one of the following:
performing a data set mapping operation;
determining first policy information;
determining validity time information of the first policy information; and
sending the first policy information, or sending the first policy information and the validity time information of the first policy information; wherein
the first policy information comprises at least one of the following:
data characteristic information;
target information corresponding to the data characteristic information;
operation information for indicating to add target information to data that matches the data characteristic information;
information for indicating to reorder data packets;
information for indicating to copy second header information of the data packet to the first header of the data packet;
first information corresponding to the data characteristic information; and
a data set mapping rule; wherein
the target information comprises at least one of the following: first information, and index information for indicating a value of the first information; and
the first information comprises at least one of the following:
data description information of a data packet;
data set association information; and
first operation indication information.

23. The method according to claim 22, wherein the data set mapping rule comprises at least one of the following:
data characteristic information, description information of a data set, information for identifying the data set mapping rule, and a priority of the data set mapping rule.

24. The method according to claim 22, wherein the data set mapping operation comprises at least one of the following:
mapping data satisfying at least one of the following to different data sets: data of different data frames, data of different types of data frames, data of data frames of different importance levels, data of different types, data of different importance levels, data of different types in a same data frame, and data of different importance levels in the same data frame;
mapping data satisfying at least one of the following to a same data set: data of a same data frame, data of data frames of a same type, data of data frames of a same importance level, data of a same type, and data of a same importance level;
mapping an importance level of a data frame or an importance level of data to an importance level of a data frame;
in a case that a data frame A depends on a data frame B, and the data frame A and the data frame B are mapped to different data sets, setting a priority of the data set of the data frame A to be higher than a priority of the data set of the data frame B; and
in a case that data A depends on data B, and the data A and the data B are mapped to different data sets, setting a priority of the data set of the data A to be higher than a priority of the data set of the data B, wherein the data A and the data B have a same data frame.

25. The method according to claim 22, wherein the determining, by the fourth communication device, a first data operation policy comprises:
obtaining fifth information; and
determining, by the fourth communication device, the first data operation policy based on the fifth information.

26. An information transmission method, comprising:
sending, by a fifth communication device, fifth information, wherein the fifth information comprises at least one of the following:
data characteristic information of first service data;
occurrence time information of a first service; and
first information corresponding to the first service data; wherein
the first information comprises at least one of the following:
data description information of a data packet;
data set association information; and
first operation indication information.

27. The method according to claim 26, wherein the data characteristic information comprises at least one of the following: service description information, data characteristic description, second header information corresponding to the data characteristic information, and information about a protocol to which the data characteristic information belongs, layer information of a protocol to which the data characteristic information belongs, and association information of data; and/or
occurrence time information of the first service comprises at least one of the following: start time, end time, and duration.

28. An information transmission apparatus, comprising:
a receiving module, configured to receive first information and/or index information for indicating a value of the first information, wherein the first information comprises at least one of the following:
data description information of a data packet;
data set association information; and
first operation indication information; and
an execution module, configured to perform a quality of service QoS control operation on a data packet based on the first information and/or the index information for indicating the value of the first information.

29. An information transmission apparatus, comprising:
a receiving module, configured to receive a data packet; and
an execution module, configured to perform a second operation on the received data packet, wherein the second operation comprises at least one of the following:
identifying whether the data packet is data that matches data characteristic information;
adding target information matching the data characteristic information to a first header of a data packet that matches the data characteristic information;
adding target information corresponding to a default data set to a first header of a data packet not matching the data characteristic information;
adding the target information corresponding to the default data set to a first header of a data packet that does not match data characteristic information in any non-default data set mapping rule;
reordering data packets; and
performing an operation of mapping the data packet to a data set; wherein
the target information comprises at least one of the following: first information, and index information for indicating a value of the first information; and
the first information comprises at least one of the following:
data description information of a data packet;
data set association information; and
first operation indication information.

30. An information transmission apparatus, comprising:
an execution module, configured to perform a third operation; wherein
the third operation comprises at least one of the following:
performing a data set mapping operation;
determining a first operating rule;
determining a validity time of the first operating rule;
determining first information and/or index information for indicating a value of the first information;
sending the first operating rule, or sending the first operating rule and the validity time of the first operating rule; and
sending the first information and/or the index information for indicating the value of the first information;
wherein
the first operating rule comprises at least one of the following:
data characteristic information;
target information corresponding to the data characteristic information;
operation information for indicating to add target information to data that matches the data characteristic information;
information for indicating to reorder data packets;
information for indicating to copy second header information of the data packet to the first header of the data packet;
a data set mapping rule; wherein
the first information comprises at least one of the following: data description information of a data packet;
data set association information; and
first operation indication information.

31. An information transmission apparatus, comprising:
an execution module, configured to perform a fourth operation; wherein
The fourth operation comprises at least one of the following:
performing a data set mapping operation;
determining first policy information;
determining validity time information of the first policy information; and
sending the first policy information, or sending the first policy information and the validity time information of the first policy information; wherein
the first policy information comprises at least one of the following:
data characteristic information;
target information corresponding to the data characteristic information;
operation information for indicating to add target information to data that matches the data characteristic information;
information for indicating to reorder data packets;
information for indicating to copy second header information of the data packet to the first header of the data packet;
first information corresponding to the data characteristic information; and
a data set mapping rule; wherein
the target information comprises at least one of the following: first information, and index information for indicating a value of the first information; and
the first information comprises at least one of the following:
data description information of a data packet;
data set association information; and
first operation indication information.

32. An information transmission apparatus, comprising:
a sending module, configured to send fifth information, wherein the fifth information comprises at least one of the following:
data characteristic information of first service data;
occurrence time information of a first service; and
first information corresponding to the first service data; wherein
wherein
the first information comprises at least one of the following:
data description information of a data packet;
data set association information; and
first operation indication information.

33. A communication device, comprising a memory, a processor, and a program or instructions stored in the memory and capable of running on the processor, wherein when the program or instructions are executed by the processor, the steps of the information transmission method according to any one of claims 1 to 15 are implemented; or when the program or instructions are executed by the processor, the steps of the information transmission method according to any one of claims 16 to 19 are implemented; or when the program or instructions are executed by the processor, the steps of the information transmission method according to any one of claims 20 to 21 are implemented; or when the program or instructions are executed by the processor, the steps of the information transmission method according to any one of claims 22 to 25 are implemented; or when the program or instructions are executed by the processor, the steps of the information transmission method according to any one of claims 26 to 27 are implemented.

34. A readable storage medium, wherein a program or instructions are stored in the readable storage medium, wherein when the program or instructions are executed by the processor, the steps of the information transmission method according to any one of claims 1 to 15 are implemented; or when the program or instructions are executed by the processor, the steps of the information transmission method according to any one of claims 16 to 19 are implemented; or when the program or instructions are executed by the processor, the steps of the information transmission method according to any one of claims 20 to 21 are implemented; or when the program or instructions are executed by the processor, the steps of the information transmission method according to any one of claims 22 to 25 are implemented; or when the program or instructions are executed by the processor, the steps of the information transmission method according to any one of claims 26 to 27 are implemented.
